(19) Europäisches Patentamt
European Patent Office
Office européen des brevets

(11) EP 3 008 121 B1

(12) # EUROPEAN PATENT SPECIFICATION

(45) Date of publication and mention of the grant of the patent:
**25.04.2018 Bulletin 2018/17**

(21) Application number: **14811658.5**

(22) Date of filing: **06.06.2014**

(51) Int Cl.:
***C08J 9/00*** *(2006.01)* ***C08K 7/00*** *(2006.01)*
***C08J 3/20*** *(2006.01)* ***C08L 67/00*** *(2006.01)*
***C08L 23/00*** *(2006.01)* ***F41H 1/02*** *(2006.01)*

(86) International application number:
**PCT/IB2014/062029**

(87) International publication number:
**WO 2014/199277 (18.12.2014 Gazette 2014/51)**

(54) **ENERGY ABSORBING MEMBER**

ENERGIEABSORBIERENDES ELEMENT

ÉLÉMENT ABSORBANT L'ÉNERGIE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.06.2013 US 201361833996 P**
**22.11.2013 US 201361907548 P**

(43) Date of publication of application:
**20.04.2016 Bulletin 2016/16**

(73) Proprietor: **Kimberly-Clark Worldwide, Inc.**
**Neenah, Wisconsin 54956 (US)**

(72) Inventors:
- **TOPOLKARAEV, Vasily, A.**
**Neenah, Wisconsin 54956 (US)**
- **MCENEANY, Ryan, J.**
**Neenah, Wisconsin 54956 (US)**
- **SCHOLL, Neil, T.**
**Neenah, Wisconsin 54956 (US)**
- **LORTSCHER, Peter, S.**
**Neenah, Wisconsin 54956 (US)**
- **MLEZIVA, Mark M.**
**Neenah, Wisconsin 54956 (US)**

(74) Representative: **Beacham, Annabel Rose**
**Dehns**
**St Bride's House**
**10 Salisbury Square**
**London EC4Y 8JD (GB)**

(56) References cited:
**EP-A1- 0 609 881** **US-A- 5 968 643**
**US-A- 5 968 643** **US-A1- 2002 180 082**
**US-A1- 2010 068 484** **US-A1- 2010 068 484**
**US-A1- 2010 092 754** **US-A1- 2010 092 754**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 008 121 B1

## Description

### Related Applications

### Background of the Invention

In most types of impact protective gear and apparel, such as bullet-proof (ballistic) vests, helmets, elbow or shin guards, etc., the energy of impact is transferred through a rigid material and subsequently to the body, causing bruising or impact trauma. Body armor, for instance, typically contains multiple layers of Kevlar® and Spectra® woven fabric encased within a fabric shell, which are collectively referred to as a "ballistic pack." As a bullet enters a Kevlar® layer, it becomes entangled in the fibers and its forward motion is stopped, but it does not dampen or absorb the transfer energy of the impact. To reduce impact trauma, trauma packs are often used in conjunction with the ballistic packs. These trauma packs are also typically constructed from Kevlar® or Spectra® fabrics, but are made up of layers that are thinner than the layers in the ballistic packs. However, trauma packs can add substantial weight and decrease the flexibility of the vest. As a result of these problems, foam pads have also been developed as a shock absorber. Nevertheless, despite being able to compress and flatten under pressure, foam materials are generally incapable of acting as a good energy absorber because they do not flow or conform to specific shapes.

As such, a need currently exists for an improved material for use as an energy absorbing member in a variety of articles, such as in protective gear.

### Summary of the Invention

An energy absorbing material is known from e.g. US 2010/068484 A1. In accordance with an embodiment of the present invention, an energy absorbing member is disclosed that comprises a polymeric material. The polymeric material is formed from a thermoplastic composition containing a continuous phase that includes a matrix polymer. A microinclusion additive and nanoinclusion additive are dispersed within the continuous phase in the form of discrete domains, wherein a porous network is defined in the material that includes a plurality of nanopores having an average cross-sectional dimension of about 800 nanometers or less.

Other features and aspects of the present invention are discussed in greater detail below.

### Brief Description of the Drawings

A full and enabling disclosure of the present invention, including the best mode thereof, directed to one of ordinary skill in the art, is set forth more particularly in the remainder of the specification, which makes reference to the appended figures in which:

Fig. 1 is a front view of one embodiment of protective gear that may employ the energy absorbing member of the present invention;
Fig. 2 is perspective view of another embodiment of protective gear that may employ the energy absorbing member of the present invention;
Fig. 3 is a cross-sectional view of one embodiment of an energy absorbing member that may be employed in the present invention;
Fig. 4 is a cross-sectional view of another embodiment of an energy absorbing member that may be employed in the present invention; and
Fig. 5 is a cross-sectional view of yet another embodiment of an energy absorbing member that may be employed in the present invention;
Figs. 6-7 are SEM microphotographs of the unstretched film of Example 3 (film was cut parallel to machine direction orientation);
Figs. 8-9 are SEM microphotographs of the stretched film of Example 3 (film was cut parallel to machine direction orientation);
Figs. 10-11 are SEM microphotographs of the unstretched film of Example 4, where the film was cut perpendicular to the machine direction in Fig. 10 and parallel to the machine direction in Fig. 11; and
Figs. 12-13 are SEM microphotographs of the stretched film of Example 4 (film was cut parallel to machine direction orientation).

Repeat use of references characters in the present specification and drawings is intended to represent same or analogous features or elements of the invention.

## Detailed Description of Representative Embodiments

Reference now will be made in detail to various embodiments of the invention, one or more examples of which are set forth below. Each example is provided by way of explanation of the invention, not limitation of the invention.

Generally speaking, the present invention is directed to an energy absorbing member that contains a porous polymeric material (e.g., film, fibrous material, molded article, etc.). The polymeric material is formed from a thermoplastic composition containing a continuous phase that includes a matrix polymer, microinclusion additive, and nanoinclusion additive. The additives may be selected so that they have a different elastic modulus than the matrix polymer. In this manner, the microinclusion and nanoinclusion additives can become dispersed within the continuous phase as discrete micro-scale and nano-scale phase domains, respectively. The present inventors have discovered that the micro-scale and nano-scale phase domains are able to interact in a unique manner when subjected to a deformation and elongational strain (e.g., drawing) to create a network of pores. Namely, it is believed that elongational strain can initiate intensive localized shear zones and/or stress intensity zones (e.g., normal stresses) near the micro-scale discrete phase domains as a result of stress concentrations that arise from the incompatibility of the materials. These shear and/or stress intensity zones cause some initial debonding in the polymer matrix adjacent to the micro-scale domains. Notably, however, localized shear and/or stress intensity zones may also be created near the nano-scale discrete phase domains that overlap with the micro-scale zones. Such overlapping shear and/or stress intensity zones cause even further debonding to occur in the polymer matrix, thereby creating a substantial number of nanopores adjacent to the nano-scale domains and/or micro-scale domains.

Through the techniques noted above, a porous network may be formed in the polymeric material so that the average percent volume occupied by the pores within a given unit volume of the material is relatively high, such as about 1 5% to about 80% per $cm^3$, in some embodiments from about 20% to about 70%, and in some embodiments, from about 30% to about 60% per cubic centimeter of the material. A substantial portion of the pores are also of a "nano-scale" size ("nanopores"), such as those having an average cross-sectional dimension of about 800 nanometers or less, in some embodiments from about 5 to about 250 nanometers, and in some embodiments, from about 10 to about 100 nanometers. The term "cross-sectional dimension" generally refers to a characteristic dimension (e.g., width or diameter) of a pore, which is substantially orthogonal to its major axis (e.g., length) and also typically substantially orthogonal to the direction of the stress applied during drawing. Such nanopores may, for example, constitute about 15 vol.% or more, in some embodiments about 20 vol.% or more, in some embodiments from about 30 vol.% to 100 vol.%, and in some embodiments, from about 40 vol.% to about 90 vol.% of the total pore volume in the polymeric material.

Due to their proximate location to discrete phase domains (e.g., micro-scale and/or nano-scale), the nanopores of the polymeric material can help to dissipate energy under load and increase impact strength at both low and high speed impacts. Without intending to be limited by theory, for example, it is believed that when subjected to a relatively low to medium impact force, a pressure wave may be created that propagates relatively slowly through the polymeric material. As the wave proceeds, the polymeric material may be reversibly compressed or deformed, and may thus cushion a body part during impact by absorbing a portion of the impact energy through internal deformation of the pore structure. During a high-speed impact, the force at the impact zone may be far greater and the resulting pressure wave may proceed much faster. The pressure wave can reach the outer boundary of the material much more quickly or from the time of impact. The can result is an internal pressure wave that occurs at a much higher pressure, leading to a much faster internal equilibrium at higher pressure. In addition, individual pores are compressed faster than they can relieve pressure by emptying into adjacent cells. Thus, at high impact speeds, the polymeric material can be non-destructively compressed only as far as the porous structure can withstand the concomitantly increasing pressure of the compressed air within the pore volume. After the pressure limit is reached, further compression of the polymeric material requires destructive deformation of the porous structure similar to conventional rigid closed cell foams, except that the pores of the present invention can still recover their original shape. The sum of the above pressure effects is to make the polymeric material very rigid during a high-speed impact, but still capable of recovering a substantial proportion of its original shape.

The resulting polymeric material may, for example, exhibit a high degree of impact strength. The material may, for instance, possess a notched Charpy impact strength of about 10 kilojoules per square meter ("$kJ/m^2$") or more, in some embodiments about 20 $kJ/m^2$ or more, in some embodiments about 35 $kJ/m^2$ or more, and in some embodiments, from about 45 $kJ/m^2$ to about 100 $kJ/m^2$, measured at 23°C according ASTM D6110-10. Also, the polymeric material is capable of absorbing a substantial amount of energy when subjected to a high speed load. For instance, the total energy absorbed by the polymeric material may be about 2 Joules or more, in some embodiments about 3 Joules or more, and in some embodiments, from about 4 to about 20 Joules. Likewise, the deflection at peak load of the polymeric material may also be about 10 millimeters or more, in some embodiments about 12.5 millimeters or more, and in some embodiments, from about 15 to about 50 millimeters, and the peak load of about 250 Newtons or more, in some embodiments about 350 Newtons or more, and in some embodiments, from about 400 to about 1000 Newtons. The total energy absorbed, deflection at peak load, and peak load may be determined by a high speed puncture test conducted in accordance with ASTM D3763-10 at a speed of 12.5 meters per second and temperature of 23°C.

The polymeric material can also possess a variety of additional functions. For example, due to its unique porous structure, the polymeric material may be generally permeable to water vapors. The permeability of the material to water vapor may characterized by its relatively high water vapor transmission rate ("WVTR"), which is the rate at which water vapor permeates through a material as measured in units of grams per meter squared per 24 hours ($g/m^2/24$ hrs). For example, the polyolefin material may exhibit a WVTR of about 300 $g/m^2$-24 hours or more, in some embodiments about 500 $g/m^2$-24 hours or more, in some embodiments about 1,000 $g/m^2$-24 hours or more, and in some embodiments, from about 3,000 to about 15,000 $g/m^2$-24 hours, such as determined in accordance with ASTM E96/96M-12, Procedure B or INDA Test Procedure IST-70.4 (01). In addition to allowing the passage of vapors, the relatively high pore volume of the material can also significantly lower the density of the material, which can allow the use of lighter, more flexible materials that still achieve good energy absorbing properties. For example, the composition may have a relatively low density, such as about 1.2 grams per cubic centimeter ("$g/cm^3$") or less, in some embodiments about 1.0 $g/cm^3$ or less, in some embodiments from about 0.2 $g/cm^3$ to about 0.8 $g/cm^3$, and in some embodiments, from about 0.1 $g/cm^3$ to about 0.5 $g/cm^3$. The polymeric material may also be generally impermeable to fluids (e.g., liquid water), thereby allowing the material to insulate a surface from water penetration. In this regard, the polymeric material may have a relatively high hydrohead value of about 50 centimeters ("cm") or more, in some embodiments about 100 cm or more, in some embodiments, about 150 cm or more, and in some embodiments, from about 200 cm to about 1000 cm, as determined in accordance with ATTCC 127-2008.

Further, the polymeric material may act as a thermal barrier that exhibits, for instance, a relatively low thermal conductivity, such as about 0.40 watts per meter-kelvin ("W/m-K") or less, in some embodiments about 0.20 W/m-K or less, in some embodiments about 0.15 W/m-K or less, in some embodiments from about 0.01 to about 0.12 W/m-K, and in some embodiments, from about 0.02 to about 0.10 W/m-K. Notably, the material is capable of achieving such low thermal conductivity values at relatively low thicknesses, which can allow the material to possess a greater degree of flexibility and conformability, as well as reduce the space it occupies in an article. For this reason, the polymeric material may also exhibit a relatively low "thermal admittance", which is equal to the thermal conductivity of the material divided by its thickness and is provided in units of watts per square meter-kelvins ("$W/m^2K$"). For example, the material may exhibit a thermal admittance of about 1000 $W/m^2K$ or less, in some embodiments from about 10 to about 800 $W/m^2K$, in some embodiments from about 20 to about 500 $W/m^2K$, and in some embodiments, from about 40 to about 200 $W/m^2K$. The actual thickness of the polymeric material may depend on its particular form, but typically ranges from about 5 micrometers to about 100 millimeters, in some embodiments from about 10 micrometers to about 50 millimeters, in some embodiments from about 200 micrometers to about 25 millimeters, and in some embodiments, from about 50 micrometers to about 5 millimeters.

Various embodiments of the present invention will now be described in more detail.

## I. Thermoplastic Composition

### A. Matrix Polymer

As indicated above, the thermoplastic composition contains a continuous phase within which the microinclusion and nanoinclusion additives are dispersed. The continuous phase contains one or more matrix polymers, which typically constitute from about 60 wt.% to about 99 wt.%, in some embodiments from about 75 wt.% to about 98 wt.%, and in some embodiments, from about 80 wt.% to about 95 wt.% of the thermoplastic composition. The nature of the matrix polymer(s) used to form the continuous phase is not critical and any suitable polymer may generally be employed, such as polyesters, polyolefins, styrenic polymers, polyamides, etc. In certain embodiments, for example, polyesters may be employed in the composition to form the polymer matrix. Any of a variety of polyesters may generally be employed, such as aliphatic polyesters, such as polycaprolactone, polyesteramides, polylactic acid (PLA) and its copolymers, polyglycolic acid, polyalkylene carbonates (e.g., polyethylene carbonate), poly-3-hydroxybutyrate (PHB), poly-3-hydroxyvalerate (PHV), poly-3-hydroxybutyrate-co-4-hydroybutyrate, poly-3-hydroxybutyrate-co-3-hydroxyvalerate copolymers (PHBV), poly-3-hydroxybutyrate-co-3-hydroxyhexanoate, poly-3-hydroxybutyrate-co-3-hydroxyoctanoate, poly-3-hydroxybutyrate-co-3-hydroxydecanoate, poly-3-hydroxybutyrate-co-3-hydroxyoctadecanoate, and succinate-based aliphatic polymers (e.g., polybutylene succinate, polybutylene succinate adipate, polyethylene succinate, etc.); aliphatic-aromatic copolyesters (e.g., polybutylene adipate terephthalate, polyethylene adipate terephthalate, polyethylene adipate isophthalate, polybutylene adipate isophthalate, etc.); aromatic polyesters (e.g., polyethylene terephthalate, polybutylene terephthalate, etc.); and so forth.

In certain cases, the thermoplastic composition may contain at least one polyester that is rigid in nature and thus has a relatively high glass transition temperature. For example, the glass transition temperature ("$T_g$") may be about 0°C or more, in some embodiments from about 5°C to about 100°C, in some embodiments from about 30°C to about 80°C, and in some embodiments, from about 50°C to about 75°C. The polyester may also have a melting temperature of from about 140°C to about 300°C, in some embodiments from about 150°C to about 250°C, and in some embodiments,

from about 160°C to about 220°C. The melting temperature may be determined using differential scanning calorimetry ("DSC") in accordance with ASTM D-3417. The glass transition temperature may be determined by dynamic mechanical analysis in accordance with ASTM E1640-09.

One particularly suitable rigid polyester is polylactic acid, which may generally be derived from monomer units of any isomer of lactic acid, such as levorotory-lactic acid ("L-lactic acid"), dextrorotatory-lactic acid ("D-lactic acid"), meso-lactic acid, or mixtures thereof. Monomer units may also be formed from anhydrides of any isomer of lactic acid, including L-lactide, D-lactide, meso-lactide, or mixtures thereof. Cyclic dimers of such lactic acids and/or lactides may also be employed. Any known polymerization method, such as polycondensation or ring-opening polymerization, may be used to polymerize lactic acid. A small amount of a chain-extending agent (e.g., a diisocyanate compound, an epoxy compound or an acid anhydride) may also be employed. The polylactic acid may be a homopolymer or a copolymer, such as one that contains monomer units derived from L-lactic acid and monomer units derived from D-lactic acid. Although not required, the rate of content of one of the monomer unit derived from L-lactic acid and the monomer unit derived from D-lactic acid is preferably about 85 mole% or more, in some embodiments about 90 mole% or more, and in some embodiments, about 95 mole% or more. Multiple polylactic acids, each having a different ratio between the monomer unit derived from L-lactic acid and the monomer unit derived from D-lactic acid, may be blended at an arbitrary percentage. Of course, polylactic acid may also be blended with other types of polymers (e.g., polyolefins, polyesters, etc.).

In one particular embodiment, the polylactic acid has the following general structure:

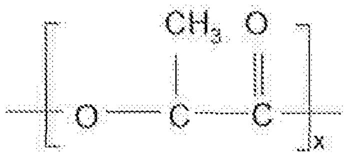

One specific example of a suitable polylactic acid polymer that may be used in the present invention is commercially available from Biomer, Inc. of Krailling, Germany) under the name BIOMER™ L9000. Other suitable polylactic acid polymers are commercially available from Natureworks LLC of Minnetonka, Minnesota (NATUREWORKS®) or Mitsui Chemical (LACEA™). Still other suitable polylactic acids may be described in U.S. Patent Nos. 4,797,468; 5,470,944; 5,770,682; 5,821,327; 5,880,254; and 6,326,458.

The polylactic acid typically has a number average molecular weight ("$M_n$") ranging from about 40,000 to about 180,000 grams per mole, in some embodiments from about 50,000 to about 160,000 grams per mole, and in some embodiments, from about 80,000 to about 120,000 grams per mole. Likewise, the polymer also typically has a weight average molecular weight ("$M_w$") ranging from about 80,000 to about 250,000 grams per mole, in some embodiments from about 100,000 to about 200,000 grams per mole, and in some embodiments, from about 110,000 to about 160,000 grams per mole. The ratio of the weight average molecular weight to the number average molecular weight ("$M_w/M_n$"), i.e., the "polydispersity index", is also relatively low. For example, the polydispersity index typically ranges from about 1.0 to about 3.0, in some embodiments from about 1.1 to about 2.0, and in some embodiments, from about 1.2 to about 1.8. The weight and number average molecular weights may be determined by methods known to those skilled in the art.

The polylactic acid may also have an apparent viscosity of from about 50 to about 600 Pascal seconds (Pa·s), in some embodiments from about 100 to about 500 Pa·s, and in some embodiments, from about 200 to about 400 Pa·s, as determined at a temperature of 190°C and a shear rate of 1000 $sec^{-1}$. The melt flow rate of the polylactic acid (on a dry basis) may also range from about 0.1 to about 40 grams per 10 minutes, in some embodiments from about 0.5 to about 20 grams per 10 minutes, and in some embodiments, from about 5 to about 15 grams per 10 minutes, determined at a load of 2160 grams and at 190°C.

Some types of neat polyesters (e.g., polylactic acid) can absorb water from the ambient environment such that it has a moisture content of about 500 to 600 parts per million ("ppm"), or even greater, based on the dry weight of the starting polylactic acid. Moisture content may be determined in a variety of ways as is known in the art, such as in accordance with ASTM D 7191-05, such as described below. Because the presence of water during melt processing can hydrolytically degrade the polyester and reduce its molecular weight, it is sometimes desired to dry the polyester prior to blending. In most embodiments, for example, it is desired that the polyester have a moisture content of about 300 parts per million ("ppm") or less, in some embodiments about 200 ppm or less, in some embodiments from about 1 to about 100 ppm prior to blending with the microinclusion and nanoinclusion additives. Drying of the polyester may occur, for instance, at a temperature of from about 50°C to about 100°C, and in some embodiments, from about 70°C to about 80°C.

B. Microinclusion Additive

As used herein, the term "microinclusion additive" generally refers to any amorphous, crystalline, or semi-crystalline material that is capable of being dispersed within the polymer matrix in the form of discrete domains of a micro-scale size. For example, prior to drawing, the domains may have an average cross-sectional dimension of from about 0.05 μm to about 30 μm, in some embodiments from about 0.1 μm to about 25 μm, in some embodiments from about 0.5 μm to about 20 μm, and in some embodiments from about 1 μm to about 10 μm. The term "cross-sectional dimension" generally refers to a characteristic dimension (e.g., width or diameter) of a domain, which is substantially orthogonal to its major axis (e.g., length) and also typically substantially orthogonal to the direction of the stress applied during drawing. While typically formed from the microinclusion additive, it should be also understood that the micro-scale domains may also be formed from a combination of the microinclusion and nanoinclusion additives and/or other components of the composition.

The microinclusion additive is generally polymeric in nature and possesses a relatively high molecular weight to help improve the melt strength and stability of the thermoplastic composition. Typically, the microinclusion polymer may be generally immiscible with the matrix polymer. In this manner, the additive can better become dispersed as discrete phase domains within a continuous phase of the matrix polymer. The discrete domains are capable of absorbing energy that arises from an external force, which increases the overall toughness and strength of the resulting material. The domains may have a variety of different shapes, such as elliptical, spherical, cylindrical, plate-like, tubular, etc. In one embodiment, for example, the domains have a substantially elliptical shape. The physical dimension of an individual domain is typically small enough to minimize the propagation of cracks through the polymeric material upon the application of an external stress, but large enough to initiate microscopic plastic deformation and allow for shear and/or stress intensity zones at and around particle inclusions.

While the polymers may be immiscible, the microinclusion additive may nevertheless be selected to have a solubility parameter that is relatively similar to that of the matrix polymer. This can improve the interfacial compatibility and physical interaction of the boundaries of the discrete and continuous phases, and thus reduces the likelihood that the composition will fracture. In this regard, the ratio of the solubility parameter for the matrix polymer to that of the additive is typically from about 0.5 to about 1.5, and in some embodiments, from about 0.8 to about 1.2. For example, the microinclusion additive may have a solubility parameter of from about 15 to about 30 $MJoules^{1/2}/m^{3/2}$, and in some embodiments, from about 18 to about 22 $MJoules^{1/2}/m^{3/2}$, while polylactic acid may have a solubility parameter of about 20.5 $MJoules^{1/2}/m^{3/2}$. The term "solubility parameter" as used herein refers to the "Hildebrand Solubility Parameter", which is the square root of the cohesive energy density and calculated according to the following equation:

$$\delta = \sqrt{((\Delta H_v - RT)/V_m)}$$

where:

*$\Delta$ Hv = heat of vaporization*
*R = Ideal Gas constant*
*T = Temperature*
*Vm = Molecular Volume*

The Hildebrand solubility parameters for many polymers are also available from the Solubility Handbook of Plastics, by Wyeych (2004). The microinclusion additive may also have a certain melt flow rate (or viscosity) to ensure that the discrete domains and resulting pores can be adequately maintained. For example, if the melt flow rate of the additive is too high, it tends to flow and disperse uncontrollably through the continuous phase. This results in lamellar, plate-like domains or co-continuous phase structures that are difficult to maintain and also likely to prematurely fracture. Conversely, if the melt flow rate of the additive is too low, it tends to clump together and form very large elliptical domains, which are difficult to disperse during blending. This may cause uneven distribution of the additive through the entirety of the continuous phase. In this regard, the present inventors have discovered that the ratio of the melt flow rate of the microinclusion additive to the melt flow rate of the matrix polymer is typically from about 0.2 to about 8, in some embodiments from about 0.5 to about 6, and in some embodiments, from about 1 to about 5. The microinclusion additive may, for example, have a melt flow rate of from about 0.1 to about 250 grams per 10 minutes, in some embodiments from about 0.5 to about 200 grams per 10 minutes, and in some embodiments, from about 5 to about 150 grams per 10 minutes, determined at a load of 2160 grams and at 190°C.

In addition to the properties noted above, the mechanical characteristics of the microinclusion additive may also be selected to achieve the desired porous network. For example, when a blend of the matrix polymer and microinclusion additive is applied with an external force, stress concentrations (e.g., including normal or shear stresses) and shear and/or plastic yielding zones may be initiated at and around the discrete phase domains as a result of stress concentrations that arise from a difference in the elastic modulus of the additive and matrix polymer. Larger stress

concentrations promote more intensive localized plastic flow at the domains, which allows them to become significantly elongated when stresses are imparted. These elongated domains can allow the composition to exhibit a more pliable and softer behavior than the matrix polymer, such as when it is a rigid polyester resin. To enhance the stress concentrations, the microinclusion additive may be selected to have a relatively low Young's modulus of elasticity in comparison to the matrix polymer. For example, the ratio of the modulus of elasticity of the matrix polymer to that of the additive is typically from about 1 to about 250, in some embodiments from about 2 to about 100, and in some embodiments, from about 2 to about 50. The modulus of elasticity of the microinclusion additive may, for instance, range from about 2 to about 1000 Megapascals (MPa), in some embodiments from about 5 to about 500 MPa, and in some embodiments, from about 10 to about 200 MPa. To the contrary, the modulus of elasticity of polylactic acid, for example, is typically from about 800 MPa to about 3000 MPa.

While a wide variety of microinclusion additives may be employed that have the properties identified above, particularly suitable examples of such additives may include synthetic polymers, such as polyolefins (e.g., polyethylene, polypropylene, polybutylene, etc.); styrenic copolymers (e.g., styrene-butadienestyrene, styrene-isoprene-styrene, styrene-ethylene-propylene-styrene, styrene-ethylene-butadiene-styrene, etc.); polytetrafluoroethylenes; polyesters (e.g., recycled polyester, polyethylene terephthalate, etc.); polyvinyl acetates (e.g., poly(ethylene vinyl acetate), polyvinyl chloride acetate, etc.); polyvinyl alcohols (e.g., polyvinyl alcohol, poly(ethylene vinyl alcohol), etc.); polyvinyl butyrals; acrylic resins (e.g., polyacrylate, polymethylacrylate, polymethylmethacrylate, etc.); polyamides (e.g., nylon); polyvinyl chlorides; polyvinylidene chlorides; polystyrenes; polyurethanes; etc. Suitable polyolefins may, for instance, include ethylene polymers (e.g., low density polyethylene ("LDPE"), high density polyethylene ("HDPE"), linear low density polyethylene ("LLDPE"), etc.), propylene homopolymers (e.g., syndiotactic, atactic, isotactic, etc.), propylene copolymers, and so forth.

In one particular embodiment, the polymer is a propylene polymer, such as homopolypropylene or a copolymer of propylene. The propylene polymer may, for instance, be formed from a substantially isotactic polypropylene homopolymer or a copolymer containing equal to or less than about 10 wt.% of other monomer, i.e., at least about 90% by weight propylene. Such homopolymers may have a melting point of from about 160°C to about 170°C.

In still another embodiment, the polyolefin may be a copolymer of ethylene or propylene with another $\alpha$-olefin, such as a $C_3$-$C_{20}$ $\alpha$-olefin or $C_3$-$C_{12}$ $\alpha$-olefin. Specific examples of suitable $\alpha$-olefins include 1-butene; 3-methyl-1-butene; 3,3-dimethyl-1-butene; 1-pentene; 1-pentene with one or more methyl, ethyl or propyl substituents; 1-hexene with one or more methyl, ethyl or propyl substituents; 1-heptene with one or more methyl, ethyl or propyl substituents; 1-octene with one or more methyl, ethyl or propyl substituents; 1-nonene with one or more methyl, ethyl or propyl substituents; ethyl, methyl or dimethyl-substituted 1-decene; 1-dodecene; and styrene. Particularly desired $\alpha$-olefin comonomers are 1-butene, 1-hexene and 1-octene. The ethylene or propylene content of such copolymers may be from about 60 mole% to about 99 mole%, in some embodiments from about 80 mole% to about 98.5 mole%, and in some embodiments, from about 87 mole% to about 97.5 mole%. The $\alpha$-olefin content may likewise range from about 1 mole% to about 40 mole%, in some embodiments from about 1.5 mole% to about 15 mole%, and in some embodiments, from about 2.5 mole% to about 13 mole%.

Exemplary olefin copolymers for use in the present invention include ethylene-based copolymers available under the designation EXACT™ from ExxonMobil Chemical Company of Houston, Texas. Other suitable ethylene copolymers are available under the designation ENGAGE™, AFFINITY™, DOWLEX™ (LLDPE) and ATTANE™ (ULDPE) from Dow Chemical Company of Midland, Michigan. Other suitable ethylene polymers are described in U.S. Patent Nos. 4,937,299 to Ewen et al.; 5,218,071 to Tsutsui et al.; 5,272,236 to Lai, et al.; and 5,278,272 to Lai, et al. Suitable propylene copolymers are also commercially available under the designations VISTAMAXX™ from ExxonMobil Chemical Co. of Houston, Texas; FINA™ (e.g., 8573) from Atofina Chemicals of Feluy, Belgium; TAFMER™ available from Mitsui Petrochemical Industries; and VERSIFY™ available from Dow Chemical Co. of Midland, Michigan. Suitable polypropylene homopolymers may likewise include Exxon Mobil 3155 polypropylene, Exxon Mobil Achieve™ resins, and Total M3661 PP resin. Other examples of suitable propylene polymers are described in U.S. Patent Nos. 6,500,563 to Datta, et al.; 5,539,056 to Yang, et al.; and 5,596,052 to Resconi, et al.

Any of a variety of known techniques may generally be employed to form the olefin copolymers. For instance, olefin polymers may be formed using a free radical or a coordination catalyst (e.g., Ziegler-Natta). Preferably, the olefin polymer is formed from a single-site coordination catalyst, such as a metallocene catalyst. Such a catalyst system produces ethylene copolymers in which the comonomer is randomly distributed within a molecular chain and uniformly distributed across the different molecular weight fractions. Metallocene-catalyzed polyolefins are described, for instance, in U.S. Patent Nos. 5,571,619 to McAlpin et al.; 5,322,728 to Davis et al., 5,472,775 to Obijeski et al.; 5,272,236 to Lai et al.; and 6,090,325 to Wheat, et al. Examples of metallocene catalysts include bis(n-butylcyclopentadienyl)titanium dichloride, bis(n-butylcyclopentadienyl)zirconium dichloride, bis(cyclopentadienyl)scandium chloride, bis(indenyl)zirconium dichloride, bis(methylcyclopentadienyl)titanium dichloride, bis(methylcyclopentadienyl)zirconium dichloride, cobaltocene, cyclopentadienyltitanium trichloride, ferrocene, hafnocene dichloride, isopropyl(cyclopentadienyl,-1-flourenyl)zirconium dichloride, molybdocene dichloride, nickelocene, niobocene dichloride, ruthenocene, titanocene dichloride,

zirconocene chloride hydride, zirconocene dichloride, and so forth. Polymers made using metallocene catalysts typically have a narrow molecular weight range. For instance, metallocene-catalyzed polymers may have polydispersity numbers ($M_w/M_n$) of below 4, controlled short chain branching distribution, and controlled isotacticity.

Regardless of the materials employed, the relative percentage of the microinclusion additive in the thermoplastic composition is selected to achieve the desired properties without significantly impacting the base properties of the composition. For example, the microinclusion additive is typically employed in an amount of from about 1 wt.% to about 30 wt.%, in some embodiments from about 2 wt.% to about 25 wt.%, and in some embodiments, from about 5 wt.% to about 20 wt.% of the thermoplastic composition, based on the weight of the continuous phase (matrix polymer(s)). The concentration of the microinclusion additive in the entire thermoplastic composition may likewise constitute from about 0.1 wt.% to about 30 wt.%, in some embodiments from about 0.5 wt.% to about 25 wt.%, and in some embodiments, from about 1 wt.% to about 20 wt.%.

C. Nanoinclusion Additive

As used herein, the term "nanoinclusion additive" generally refers to any amorphous, crystalline, or semi-crystalline material that is capable of being dispersed within the polymer matrix in the form of discrete domains of a nano-scale size. For example, prior to drawing, the domains may have an average cross-sectional dimension of from about 1 to about 1000 nanometers, in some embodiments from about 5 to about 800 nanometers, in some embodiments from about 10 to about 500 nanometers, and in some embodiments from about 20 to about 200 nanometers. It should be also understood that the nano-scale domains may also be formed from a combination of the microinclusion and nanoinclusion additives and/or other components of the composition. The nanoinclusion additive is typically employed in an amount of from about 0.05 wt.% to about 20 wt.%, in some embodiments from about 0.1 wt.% to about 10 wt.%, and in some embodiments, from about 0.5 wt.% to about 5 wt.% of the thermoplastic composition, based on the weight of the continuous phase (matrix polymer(s)). The concentration of the nanoinclusion additive in the entire thermoplastic composition may likewise be from about 0.01 wt.% to about 15 wt.%, in some embodiments from about 0.05 wt.% to about 10 wt.%, and in some embodiments, from about 0.3 wt.% to about 6 wt.% of the thermoplastic composition.

The nanoinclusion additive may be polymeric in nature and possess a relatively high molecular weight to help improve the melt strength and stability of the thermoplastic composition. To enhance its ability to become dispersed into nano-scale domains, the nanoinclusion additive may also be selected from materials that are generally compatible with the matrix polymer and the microinclusion additive. This may be particularly useful when the matrix polymer or the microinclusion additive possesses a polar moiety, such as a polyester. One example such a nanoinclusion additive is a functionalized polyolefin. The polar component may, for example, be provided by one or more functional groups and the non-polar component may be provided by an olefin. The olefin component of the nanoinclusion additive may generally be formed from any linear or branched $\alpha$-olefin monomer, oligomer, or polymer (including copolymers) derived from an olefin monomer, such as described above.

The functional group of the nanoinclusion additive may be any group, molecular segment and/or block that provides a polar component to the molecule and is not compatible with the matrix polymer. Examples of molecular segment and/or blocks not compatible with polyolefin may include acrylates, styrenics, polyesters, polyamides, etc. The functional group can have an ionic nature and comprise charged metal ions. Particularly suitable functional groups are maleic anhydride, maleic acid, fumaric acid, maleimide, maleic acid hydrazide, a reaction product of maleic anhydride and diamine, methylnadic anhydride, dichloromaleic anhydride, maleic acid amide, etc. Maleic anhydride modified polyolefins are particularly suitable for use in the present invention. Such modified polyolefins are typically formed by grafting maleic anhydride onto a polymeric backbone material. Such maleated polyolefins are available from E. I. du Pont de Nemours and Company under the designation Fusabond®, such as the P Series (chemically modified polypropylene), E Series (chemically modified polyethylene), C Series (chemically modified ethylene vinyl acetate), A Series (chemically modified ethylene acrylate copolymers or terpolymers), or N Series (chemically modified ethylene-propylene, ethylene-propylene diene monomer ("EPDM") or ethylene-octene). Alternatively, maleated polyolefins are also available from Chemtura Corp. under the designation Polybond® and Eastman Chemical Company under the designation Eastman G series.

In certain embodiments, the nanoinclusion additive may also be reactive. One example of such a reactive nanoinclusion additive is a polyepoxide that contains, on average, at least two oxirane rings per molecule. Without intending to be limited by theory, it is believed that such polyepoxide molecules can induce reaction of the matrix polymer (e.g., polyester) under certain conditions, thereby improving its melt strength without significantly reducing glass transition temperature. The reaction may involve chain extension, side chain branching, grafting, copolymer formation, etc. Chain extension, for instance, may occur through a variety of different reaction pathways. For instance, the modifier may enable a nucleophilic ring-opening reaction via a carboxyl terminal group of a polyester (esterification) or via a hydroxyl group (etherification). Oxazoline side reactions may likewise occur to form esteramide moieties. Through such reactions, the molecular weight of the matrix polymer may be increased to counteract the degradation often observed during melt

processing. While it may be desirable to induce a reaction with the matrix polymer as described above, the present inventors have discovered that too much of a reaction can lead to crosslinking between polymer backbones. If such crosslinking is allowed to proceed to a significant extent, the resulting polymer blend can become brittle and difficult to process into a material with the desired strength and elongation properties.

In this regard, the present inventors have discovered that polyepoxides having a relatively low epoxy functionality are particularly effective, which may be quantified by its "epoxy equivalent weight." The epoxy equivalent weight reflects the amount of resin that contains one molecule of an epoxy group, and it may be calculated by dividing the number average molecular weight of the modifier by the number of epoxy groups in the molecule. The polyepoxide of the present invention typically has a number average molecular weight from about 7,500 to about 250,000 grams per mole, in some embodiments from about 15,000 to about 150,000 grams per mole, and in some embodiments, from about 20,000 to 100,000 grams per mole, with a polydispersity index typically ranging from 2.5 to 7. The polyepoxide may contain less than 50, in some embodiments from 5 to 45, and in some embodiments, from 15 to 40 epoxy groups. In turn, the epoxy equivalent weight may be less than about 15,000 grams per mole, in some embodiments from about 200 to about 10,000 grams per mole, and in some embodiments, from about 500 to about 7,000 grams per mole.

The polyepoxide may be a linear or branched, homopolymer or copolymer (e.g., random, graft, block, etc.) containing terminal epoxy groups, skeletal oxirane units, and/or pendent epoxy groups. The monomers employed to form such polyepoxides may vary. In one particular embodiment, for example, the polyepoxide contains at least one epoxy-functional (meth)acrylic monomeric component. As used herein, the term "(meth)acrylic" includes acrylic and methacrylic monomers, as well as salts or esters thereof, such as acrylate and methacrylate monomers. For example, suitable epoxy-functional (meth)acrylic monomers may include, but are not limited to, those containing 1,2-epoxy groups, such as glycidyl acrylate and glycidyl methacrylate. Other suitable epoxy-functional monomers include allyl glycidyl ether, glycidyl ethacrylate, and glycidyl itoconate.

The polyepoxide typically has a relatively high molecular weight, as indicated above, so that it may not only result in chain extension, but also help to achieve the desired blend morphology. The resulting melt flow rate of the polymer is thus typically within a range of from about 10 to about 200 grams per 10 minutes, in some embodiments from about 40 to about 150 grams per 10 minutes, and in some embodiments, from about 60 to about 120 grams per 10 minutes, determined at a load of 2160 grams and at a temperature of 190°C.

If desired, additional monomers may also be employed in the polyepoxide to help achieve the desired molecular weight. Such monomers may vary and include, for example, ester monomers, (meth)acrylic monomers, olefin monomers, amide monomers, etc. In one particular embodiment, for example, the polyepoxide includes at least one linear or branched α-olefin monomer, such as those having from 2 to 20 carbon atoms and preferably from 2 to 8 carbon atoms. Specific examples include ethylene, propylene, 1-butene; 3-methyl-1-butene; 3,3-dimethyl-1-butene; 1-pentene; 1-pentene with one or more methyl, ethyl or propyl substituents; 1-hexene with one or more methyl, ethyl or propyl substituents; 1-heptene with one or more methyl, ethyl or propyl substituents; 1-octene with one or more methyl, ethyl or propyl substituents; 1-nonene with one or more methyl, ethyl or propyl substituents; ethyl, methyl or dimethyl-substituted 1-decene; 1-dodecene; and styrene. Particularly desired α-olefin comonomers are ethylene and propylene.

Another suitable monomer may include a (meth)acrylic monomer that is not epoxy-functional. Examples of such (meth)acrylic monomers may include methyl acrylate, ethyl acrylate, n-propyl acrylate, i-propyl acrylate, n-butyl acrylate, s-butyl acrylate, i-butyl acrylate, t-butyl acrylate, n-amyl acrylate, i-amyl acrylate, isobornyl acrylate, n-hexyl acrylate, 2-ethylbutyl acrylate, 2-ethylhexyl acrylate, n-octyl acrylate, n-decyl acrylate, methylcyclohexyl acrylate, cyclopentyl acrylate, cyclohexyl acrylate, methyl methacrylate, ethyl methacrylate, 2-hydroxyethyl methacrylate, n-propyl methacrylate, n-butyl methacrylate, i-propyl methacrylate, i-butyl methacrylate, n-amyl methacrylate, n-hexyl methacrylate, i-amyl methacrylate, s-butyl-methacrylate, t-butyl methacrylate, 2-ethylbutyl methacrylate, methylcyclohexyl methacrylate, cinnamyl methacrylate, crotyl methacrylate, cyclohexyl methacrylate, cyclopentyl methacrylate, 2-ethoxyethyl methacrylate, isobornyl methacrylate, etc., as well as combinations thereof.

In one particularly desirable embodiment of the present invention, the polyepoxide is a terpolymer formed from an epoxy-functional (meth)acrylic monomeric component, α-olefin monomeric component, and non-epoxy functional (meth)acrylic monomeric component. For example, the polyepoxide may be poly(ethylene-*co*-methylacrylate-*co*-glycidyl methacrylate), which has the following structure:

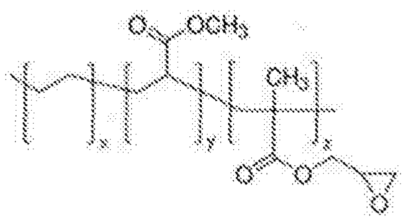

wherein, x, y, and z are 1 or greater.

The epoxy functional monomer may be formed into a polymer using a variety of known techniques. For example, a monomer containing polar functional groups may be grafted onto a polymer backbone to form a graft copolymer. Such grafting techniques are well known in the art and described, for instance, in U.S. Patent No. 5,179,164. In other embodiments, a monomer containing epoxy functional groups may be copolymerized with a monomer to form a block or random copolymer using known free radical polymerization techniques, such as high pressure reactions, Ziegler-Natta catalyst reaction systems, single site catalyst (e.g., metallocene) reaction systems, etc.

The relative portion of the monomeric component(s) may be selected to achieve a balance between epoxy-reactivity and melt flow rate. More particularly, high epoxy monomer contents can result in good reactivity with the matrix polymer, but too high of a content may reduce the melt flow rate to such an extent that the polyepoxide adversely impacts the melt strength of the polymer blend. Thus, in most embodiments, the epoxy-functional (meth)acrylic monomer(s) constitute from about 1 wt.% to about 25 wt.%, in some embodiments from about 2 wt.% to about 20 wt.%, and in some embodiments, from about 4 wt.% to about 15 wt.% of the copolymer. The $\alpha$-olefin monomer(s) may likewise constitute from about 55 wt.% to about 95 wt.%, in some embodiments from about 60 wt.% to about 90 wt.%, and in some embodiments, from about 65 wt.% to about 85 wt.% of the copolymer. When employed, other monomeric components (e.g., non-epoxy functional (meth)acrylic monomers) may constitute from about 5 wt.% to about 35 wt.%, in some embodiments from about 8 wt.% to about 30 wt.%, and in some embodiments, from about 10 wt.% to about 25 wt.% of the copolymer. One specific example of a suitable polyepoxide that may be used in the present invention is commercially available from Arkema under the name LOTADER® AX8950 or AX8900. LOTADER® AX8950, for instance, has a melt flow rate of 70 to 100 g/10 min and has a glycidyl methacrylate monomer content of 7 wt.% to 11 wt.%, a methyl acrylate monomer content of 13 wt.% to 17 wt.%, and an ethylene monomer content of 72 wt.% to 80 wt.%. Another suitable polyepoxide is commercially available from DuPont under the name ELVALOY® PTW, which is a terpolymer of ethylene, butyl acrylate, and glycidyl methacrylate and has a melt flow rate of 12 g/10 min.

In addition to controlling the type and relative content of the monomers used to form the polyepoxide, the overall weight percentage may also be controlled to achieve the desired benefits. For example, if the modification level is too low, the desired increase in melt strength and mechanical properties may not be achieved. The present inventors have also discovered, however, that if the modification level is too high, processing may be restricted due to strong molecular interactions (e.g., crosslinking) and physical network formation by the epoxy functional groups. Thus, the polyepoxide is typically employed in an amount of from about 0.05 wt.% to about 10 wt.%, in some embodiments from about 0.1 wt.% to about 8 wt.%, in some embodiments from about 0.5 wt.% to about 5 wt.%, and in some embodiments, from about 1 wt.% to about 3 wt.%, based on the weight of the matrix polymer employed in the composition. The polyepoxide may also constitute from about 0.05 wt.% to about 10 wt.%, in some embodiments from about 0.05 wt.% to about 8 wt.%, in some embodiments from about 0.1 wt.% to about 5 wt.%, and in some embodiments, from about 0.5 wt.% to about 3 wt.%, based on the total weight of the composition.

Other reactive nanoinclusion additives may also be employed in the present invention, such as oxazoline-functionalized polymers, cyanide-functionalized polymers, etc. When employed, such reactive nanoinclusion additives may be employed within the concentrations noted above for the polyepoxide. In one particular embodiment, an oxazoline-grafted polyolefin may be employed that is a polyolefin grafted with an oxazoline ring-containing monomer. The oxazoline may include a 2-oxazoline, such as 2-vinyl-2-oxazoline (e.g., 2-isopropenyl-2-oxazoline), 2-fatty-alkyl-2-oxazoline (e.g., obtainable from the ethanolamide of oleic acid, linoleic acid, palmitoleic acid, gadoleic acid, erucic acid and/or arachidonic acid) and combinations thereof. In another embodiment, the oxazoline may be selected from ricinoloxazoline maleinate, undecyl-2-oxazoline, soya-2-oxazoline, ricinus-2-oxazoline and combinations thereof, for example. In yet another embodiment, the oxazoline is selected from 2-isopropenyl-2-oxazoline, 2-isopropenyl-4,4-dimethyl-2-oxazoline and combinations thereof.

Nanofillers may also be employed, such as carbon black, carbon nanotubes, carbon nanofibers, nanoclays, metal nanoparticles, nanosilica, nanoalumina, etc. Nanoclays are particularly suitable. The term "nanoclay" generally refers to nanoparticles of a clay material (a naturally occurring mineral, an organically modified mineral, or a synthetic nanomaterial), which typically have a platelet structure. Examples of nanoclays include, for instance, montmorillonite (2:1 layered smectite clay structure), bentonite (aluminium phyllosilicate formed primarily of montmorillonite), kaolinite (1:1 aluminosilicate having a platy structure and empirical formula of $Al_2Si_2O_5(OH)_4$), halloysite (1:1 aluminosilicate having a tubular structure and empirical formula of $Al_2Si_2O_5(OH)_4$), etc. An example of a suitable nanoclay is Cloisite®, which is a montmorillonite nanoclay and commercially available from Southern Clay Products, Inc. Other examples of synthethic nanoclays include but are not limited to a mixed-metal hydroxide nanoclay, layered double hydroxide nanoclay (e.g., sepiocite), laponite, hectorite, saponite, indonite, etc.

If desired, the nanoclay may contain a surface treatment to help improve compatibility with the matrix polymer (e.g., polyester). The surface treatment may be organic or inorganic. In one embodiment, an organic surface treatment is employed that is obtained by reacting an organic cation with the clay. Suitable organic cations may include, for instance, organoquaternary ammonium compounds that are capable of exchanging cations with the clay, such as dimethyl bis[hydrogenated tallow] ammonium chloride (2M2HT), methyl benzyl bis[hydrogenated tallow] ammonium chloride (MB2HT), methyl tris[hydrogenated tallow alkyl] chloride (M3HT), etc. Examples of commercially available organic nanoclays may include, for instance, Dellite® 43B (Laviosa Chimica of Livorno, Italy), which is a montmorillonite clay modified with dimethyl benzylhydrogenated tallow ammonium salt. Other examples include Cloisite® 25A and Cloisite® 30B (Southern Clay Products) and Nanofil 919 (Süd Chemie). If desired, the nanofiller can be blended with a carrier resin to form a masterbatch that enhances the compatibility of the additive with the other polymers in the composition. Particularly suitable carrier resins include, for instance, polyesters (e.g., polylactic acid, polyethylene terephthalate, etc.); polyolefins (e.g., ethylene polymers, propylene polymers, etc.); and so forth, as described in more detail above.

In certain embodiments of the present invention, multiple nanoinclusion additives may be employed in combination. For instance, a first nanoinclusion additive (e.g., polyepoxide) may be dispersed in the form of domains having an average cross-sectional dimension of from about 50 to about 500 nanometers, in some embodiments from about 60 to about 400 nanometers, and in some embodiments from about 80 to about 300 nanometers. A second nanoinclusion additive (e.g., nanofiller) may also be dispersed in the form of domains that are smaller than the first nanoinclusive additive, such as those having an average cross-sectional dimension of from about 1 to about 50 nanometers, in some embodiments from about 2 to about 45 nanometers, and in some embodiments from about 5 to about 40 nanometers. When employed, the first and/or second nanoinclusion additives typically constitute from about 0.05 wt.% to about 20 wt.%, in some embodiments from about 0.1 wt.% to about 10 wt.%, and in some embodiments, from about 0.5 wt.% to about 5 wt.% of the thermoplastic composition, based on the weight of the continuous phase (matrix polymer(s)). The concentration of the first and/or second nanonclusion additives in the entire thermoplastic composition may likewise be from about 0.01 wt.% to about 15 wt.%, in some embodiments from about 0.05 wt.% to about 10 wt.%, and in some embodiments, from about 0.1 wt.% to about 8 wt.% of the thermoplastic composition.

D. Other Components

A wide variety of ingredients may be employed in the composition for a variety of different reasons. For instance, in one particular embodiment, an interphase modifier may be employed in the thermoplastic composition to help reduce the degree of friction and connectivity between the microinclusion additive and matrix polymer, and thus enhance the degree and uniformity of debonding. In this manner, the pores can become distributed in a more homogeneous fashion throughout the composition. The modifier may be in a liquid or semi-solid form at room temperature (e.g., 25°C) so that it possesses a relatively low viscosity, allowing it to be more readily incorporated into the thermoplastic composition and to easily migrate to the polymer surfaces. In this regard, the kinematic viscosity of the interphase modifier is typically from about 0.7 to about 200 centistokes ("cs"), in some embodiments from about 1 to about 100 cs, and in some embodiments, from about 1.5 to about 80 cs, determined at 40°C. In addition, the interphase modifier is also typically hydrophobic so that it has an affinity for the microinclusion additive, for example, resulting in a change in the interfacial tension between the matrix polymer and the additive. By reducing physical forces at the interfaces between the matrix polymer and the microinclusion additive, it is believed that the low viscosity, hydrophobic nature of the modifier can help facilitate debonding. As used herein, the term "hydrophobic" typically refers to a material having a contact angle of water in air of about 40° or more, and in some cases, about 60° or more. In contrast, the term "hydrophilic" typically refers to a material having a contact angle of water in air of less than about 40°. One suitable test for measuring the contact angle is ASTM D5725-99 (2008).

Suitable hydrophobic, low viscosity interphase modifiers may include, for instance, silicones, silicone-polyether copolymers, aliphatic polyesters, aromatic polyesters, alkylene glycols (e.g., ethylene glycol, diethylene glycol, triethylene glycol, tetraethylene glycol, propylene glycol, polyethylene glycol, polypropylene glycol, polybutylene glycol, etc.), alkane diols (e.g., 1,3-propanediol, 2,2-dimethyl-1,3-propanediol, 1,3-butanediol, 1,4-butanediol, 1,5-pentanediol, 1,6-hexanediol, 2,2,4-trimethyl-1,6 hexanediol, 1,3-cyclohexanedimethanol, 1,4-cyclohexanedimethanol, 2,2,4,4-tetramethyl-1,3-cyclobutanediol, etc.), amine oxides (e.g., octyldimethylamine oxide), fatty acid esters, fatty acid amides (e.g., oleamide, erucamide, stearamide, ethylene bis(stearamide), , etc.), mineral, and vegetable oils, and so forth. One particularly suitable liquid or semi-solid is polyether polyol, such as commercially available under the trade name Pluriol® WI from BASF Corp. Another suitable modifier is a partially renewable ester, such as commercially available under the trade name HALLGREEN® IM from Hallstar.

When employed, the interphase modifier may constitute from about 0.1 wt.% to about 20 wt.%, in some embodiments from about 0.5 wt.% to about 15 wt.%, and in some embodiments, from about 1 wt.% to about 10 wt.% of the thermoplastic composition, based on the weight of the continuous phase (matrix polymer(s)). The concentration of the interphase modifier in the entire thermoplastic composition may likewise constitute from about 0.05 wt.% to about 20 wt.%, in some embodiments from about 0.1 wt.% to about 15 wt.%, and in some embodiments, from about 0.5 wt.% to about 10 wt.%.

When employed in the amounts noted above, the interphase modifier has a character that enables it to readily migrate to the interfacial surface of the polymers and facilitate debonding without disrupting the overall melt properties

of the thermoplastic composition. For example, the interphase modifier does not typically have a plasticizing effect on the polymer by reducing its glass transition temperature. Quite to the contrary, the present inventors have discovered that the glass transition temperature of the thermoplastic composition may be substantially the same as the initial matrix polymer. In this regard, the ratio of the glass temperature of the composition to that of the matrix polymer is typically from about 0.7 to about 1.3, in some embodiments from about 0.8 to about 1.2, and in some embodiments, from about 0.9 to about 1.1. The thermoplastic composition may, for example, have a glass transition temperature of from about 35°C to about 80°C, in some embodiments from about 40°C to about 80°C, and in some embodiments, from about 50°C to about 65°C. The melt flow rate of the thermoplastic composition may also be similar to that of the matrix polymer. For example, the melt flow rate of the composition (on a dry basis) may be from about 0.1 to about 70 grams per 10 minutes, in some embodiments from about 0.5 to about 50 grams per 10 minutes, and in some embodiments, from about 5 to about 25 grams per 10 minutes, determined at a load of 2160 grams and at a temperature of 190°C.

Compatibilizers may also be employed that improve interfacial adhesion and reduce the interfacial tension between the domain and the matrix, thus allowing the formation of smaller domains during mixing. Examples of suitable compatibilizers may include, for instance, copolymers functionalized with epoxy or maleic anhydride chemical moieties. An example of a maleic anhydride compatibilizer is polypropylene-grafted-maleic anhydride, which is commercially available from Arkema under the trade names Orevac™ 18750 and Orevac™ CA 100. When employed, compatibilizers may constitute from about 0.05 wt.% to about 10 wt.%, in some embodiments from about 0.1 wt.% to about 8 wt.%, and in some embodiments, from about 0.5 wt.% to about 5 wt.% of the thermoplastic composition, based on the weight of the continuous phase matrix.

Other suitable materials that may also be used in the thermoplastic composition, such as catalysts, antioxidants, stabilizers, surfactants, waxes, solid solvents, fillers, nucleating agents (e.g., calcium carbonate, etc.), particulates, and other materials added to enhance the processability and mechanical properties of the thermoplastic composition. Nevertheless, one beneficial aspect of the present invention is that good properties may be provided without the need for various conventional additives, such as blowing agents (e.g., chlorofluorocarbons, hydrochlorofluorocarbons, hydrocarbons, carbon dioxide, supercritical carbon dioxide, nitrogen, etc.) and plasticizers (e.g., solid or semi-solid polyethylene glycol). In fact, the thermoplastic composition may be generally free of blowing agents and/or plasticizers. For example, blowing agents and/or plasticizers may be present in an amount of no more than about 1 wt.%, in some embodiments no more than about 0.5 wt.%, and in some embodiments, from about 0.001 wt.% to about 0.2 wt.% of the thermoplastic composition. Further, due to its stress whitening properties, as described in more detail below, the resulting composition may achieve an opaque color (e.g., white) without the need for conventional pigments, such as titanium dioxide. In certain embodiments, for example, pigments may be present in an amount of no more than about 1 wt.%, in some embodiments no more than about 0.5 wt.%, and in some embodiments, from about 0.001 wt.% to about 0.2 wt.% of the thermoplastic composition.

II. Polymeric Material

As indicated above, the polymeric material of the present invention is generally formed by drawing a thermoplastic composition that contains the matrix polymer, microinclusion additive, nanoinclusion additive, as well as other optional components. To form the initial thermoplastic composition, the components are typically blended together using any of a variety of known techniques. In one embodiment, for example, the components may be supplied separately or in combination. For instance, the components may first be dry mixed together to form an essentially homogeneous dry mixture, and they may likewise be supplied either simultaneously or in sequence to a melt processing device that dispersively blends the materials. Batch and/or continuous melt processing techniques may be employed. For example, a mixer/kneader, Banbury mixer, Farrel continuous mixer, single-screw extruder, twin-screw extruder, roll mill, etc., may be utilized to blend and melt process the materials. Particularly suitable melt processing devices may be a co-rotating, twin-screw extruder (e.g., ZSK-30 extruder available from Werner & Pfleiderer Corporation of Ramsey, New Jersey or a Thermo Prism™ USALAB 16 extruder available from Thermo Electron Corp., Stone, England). Such extruders may include feeding and venting ports and provide high intensity distributive and dispersive mixing. For example, the components may be fed to the same or different feeding ports of the twin-screw extruder and melt blended to form a substantially homogeneous melted mixture. If desired, other additives may also be injected into the polymer melt and/or separately fed into the extruder at a different point along its length.

Regardless of the particular processing technique chosen, the resulting melt blended composition typically contains micro-scale domains of the microinclusion additive and nano-scale domains of the nanoinclusion additive as described above. The degree of shear/pressure and heat may be controlled to ensure sufficient dispersion, but not so high as to adversely reduce the size of the domains so that they are incapable of achieving the desired properties. For example, blending typically occurs at a temperature of from about 180°C to about 300°C, in some embodiments from about 185°C to about 250°C, and in some embodiments, from about 190°C to about 240°C. Likewise, the apparent shear rate during melt processing may range from about 10 $seconds^{-1}$ to about 3000 $seconds^{-1}$, in some embodiments

from about 50 seconds$^{-1}$ to about 2000 seconds$^{-1}$, and in some embodiments, from about 100 seconds$^{-1}$ to about 1200 seconds$^{-1}$. The apparent shear rate may be equal to $4Q/\pi R^3$, where $Q$ is the volumetric flow rate ("$m^3/s$") of the polymer melt and $R$ is the radius ("m") of the capillary (e.g., extruder die) through which the melted polymer flows. Of course, other variables, such as the residence time during melt processing, which is inversely proportional to throughput rate, may also be controlled to achieve the desired degree of homogeneity.

To achieve the desired shear conditions (e.g., rate, residence time, shear rate, melt processing temperature, etc.), the speed of the extruder screw(s) may be selected with a certain range. Generally, an increase in product temperature is observed with increasing screw speed due to the additional mechanical energy input into the system. For example, the screw speed may range from about 50 to about 600 revolutions per minute ("rpm"), in some embodiments from about 70 to about 500 rpm, and in some embodiments, from about 100 to about 300 rpm. This may result in a temperature that is sufficient high to disperse the microinclusion additive without adversely impacting the size of the resulting domains. The melt shear rate, and in turn the degree to which the additives are dispersed, may also be increased through the use of one or more distributive and/or dispersive mixing elements within the mixing section of the extruder. Suitable distributive mixers for single screw extruders may include, for instance, Saxon, Dulmage, Cavity Transfer mixers, etc. Likewise, suitable dispersive mixers may include Blister ring, Leroy/Maddock, CRD mixers, etc. As is well known in the art, the mixing may be further improved by using pins in the barrel that create a folding and reorientation of the polymer melt, such as those used in Buss Kneader extruders, Cavity Transfer mixers, and Vortex Intermeshing Pin (VIP) mixers.

Once blended, the porous network structure is introduced by drawing the composition in the longitudinal direction (e.g., machine direction), transverse direction (e.g., cross-machine direction), etc., as well as combinations thereof. To perform the desired drawing, the thermoplastic composition may be formed into a precursor shape, drawn, and thereafter converted into the desired material (e.g., film, fiber, etc.). In one embodiment, the precursor shape may be a film having a thickness of from about 1 to about 5000 micrometers, in some embodiments from about 2 to about 4000 micrometers, in some embodiments from about 5 to about 2500 micrometers, and in some embodiments, from about 10 to about 500 micrometers. As an alternative to forming a precursor shape, the thermoplastic composition may also be drawn in situ as it is being shaped into the desired form for the polymeric material. In one embodiment, for example, the thermoplastic composition may be drawn as it is being formed into a film or fiber.

Regardless, various drawing techniques may be employed, such as aspiration (e.g., fiber draw units), tensile frame drawing, biaxial drawing, multi-axial drawing, profile drawing, vacuum drawing, etc. In one embodiment, for example, the composition is drawn with a machine direction orienter ("MDO"), such as commercially available from Marshall and Willams, Co. of Providence, Rhode Island. MDO units typically have a plurality of drawing rolls (e.g., from 5 to 8) which progressively draw and thin the film in the machine direction. The composition may be drawn in either single or multiple discrete drawing operations. It should be noted that some of the rolls in an MDO apparatus may not be operating at progressively higher speeds. To draw the composition in the manner described above, it is typically desired that the rolls of the MDO are not heated. Nevertheless, if desired, one or more rolls may be heated to a slight extent to facilitate the drawing process so long as the temperature of the composition remains below the ranges noted above.

The degree of drawing depends in part of the nature of the material being drawn (e.g., fiber or film). The composition is typically drawn (e.g., in the machine direction) to a draw ratio of from about 1.1 to about 3.5, in some embodiments from about 1.2 to about 3.0, and in some embodiments, from about 1.3 to about 2.5. The draw ratio may be determined by dividing the length of the drawn material by its length before drawing. The draw rate may also vary to help achieve the desired properties, such as within the range of from about 5% to about 1 500% per minute of deformation, in some embodiments from about 20% to about 1000% per minute of deformation, and in some embodiments, from about 25% to about 850% per minute of deformation. The composition is generally kept at a temperature below the glass temperature of the matrix polymer and/or microinclusion additive during drawing. Among other things, this helps to ensure that the polymer chains are not altered to such an extent that the porous network becomes unstable. For example, the composition may be drawn at a temperature that is at least about 10°C, in some embodiments at least about 20°C, and in some embodiments, at least about 30°C below the glass transition temperature of the matrix polymer. For example, the composition may be drawn at a temperature of from about 0°C to about 50°C, in some embodiments from about 15°C to about 40°C, and in some embodiments, from about 20°C to about 30°C. Although the composition is typically drawn without the application of external heat (e.g., heated rolls), such heat might be optionally employed to improve processability, reduce draw force, increase draw rates, and improve fiber uniformity.

Drawing in the manner described above can result in the formation of pores that have a "nano-scale" dimension ("nanopores"), such as an average cross-sectional dimension of about 800 nanometers or less, in some embodiments from about 5 to about 250 nanometers, and in some embodiments, from about 10 to about 100 nanometers. Micropores may also be formed at and around the micro-scale domains during drawing that have an average cross-sectional dimension of from about 0.5 to about 30 micrometers, in some embodiments from about 1 to about 20 micrometers, and in some embodiments, from about 2 micrometers to about 15 micrometers. The micropores and/or nanopores may have any regular or irregular shape, such as spherical, elongated, etc. In certain cases, the axial dimension of the micropores

and/or nanopores may be larger than the cross-sectional dimension so that the aspect ratio (the ratio of the axial dimension to the cross-sectional dimension) is from about 1 to about 30, in some embodiments from about 1.1 to about 15, and in some embodiments, from about 1.2 to about 5. The "axial dimension" is the dimension in the direction of the major axis (e.g., length), which is typically in the direction of drawing.

The present inventors have also discovered that the pores (e.g., micropores, nanopores, or both) can be distributed in a substantially homogeneous fashion throughout the material. For example, the pores may be distributed in columns that are oriented in a direction generally perpendicular to the direction in which a stress is applied. These columns may be generally parallel to each other across the width of the material. Without intending to be limited by theory, it is believed that the presence of such a homogeneously distributed porous network can result in a high thermal resistance as well as good mechanical properties (e.g., energy dissipation under load and impact strength). This is in stark contrast to conventional techniques for creating pores that involve the use of blowing agents, which tend to result in an uncontrolled pore distribution and poor mechanical properties. Notably, the formation of the porous network by the process described above does not necessarily result in a substantial change in the cross-sectional size (e.g., width) of the material. In other words, the material is not substantially necked, which may allow the material to retain a greater degree of strength properties.

In addition to forming a porous network, drawing can also significantly increase the axial dimension of the micro-scale domains so that they have a generally linear, elongated shape. For example, the elongated micro-scale domains may have an axial dimension that is about 10% or more, in some embodiments from about 20% to about 500%, and in some embodiments, from about 50% to about 250% greater than the axial dimension of the domains prior to drawing. The average axial dimension after drawing may, for instance, range from about 0.5 to about 250 micrometers, in some embodiments from about 1 to about 100 micrometers, in some embodiments from about 2 to about 50 micrometers, and in some embodiments, from about 5 to about 25 micrometers. The micro-scale domains may also be relatively thin and thus have a small cross-sectional dimension. For instance, the cross-sectional dimension may be from about 0.05 to about 50 micrometers, in some embodiments from about 0.2 to about 10 micrometers, and in some embodiments, from 0.5 to about 5 micrometers. This may result in an aspect ratio for the micro-scale domains (the ratio of the axial dimension to the cross-sectional dimension) of from about 2 to about 150, in some embodiments from about 3 to about 100, and in some embodiments, from about 4 to about 50.

As a result of the porous and elongated domain structure, the present inventors have discovered that the resulting polymeric material can expand uniformly in volume when drawn in longitudinal direction, which is reflected by a low "Poisson coefficient", as determined according to the following equation:

$$\text{Poisson coefficient} = -E_{transverse} / E_{longitudinal}$$

where $E_{transverse}$ is the transverse deformation of the material and $E_{longitudinal}$ is the longitudinal deformation of the material. More particularly, the Poisson coefficient of the material can be approximately 0 or even negative. For example, the Poisson coefficient may be about 0.1 or less, in some embodiments about 0.08 or less, and in some embodiments, from about -0.1 to about 0.04. When the Poisson coefficient is zero, there is no contraction in transverse direction when the material is expanded in the longitudinal direction. When the Poisson coefficient is negative, the transverse or lateral dimensions of the material are also expanding when the material is drawn in the longitudinal direction. Materials having a negative Poisson coefficient can thus exhibit an increase in width when drawn in the longitudinal direction, which can result in increased energy absorption in the cross direction.

The polymeric material of the present invention may generally have a variety of different forms depending on the particular application, such as films, fibrous materials, molded articles, profiles, etc., as well as composites and laminates thereof, for use in an energy absorbing member. In one embodiment, for example, the polymeric material is in the form of a fibrous material or a layer or component of a fibrous material, which can include individual staple fibers or filaments (continuous fibers), as well as yarns, fabrics, etc. formed from such fibers. Yarns may include, for instance, multiple staple fibers that are twisted together ("spun yarn"), filaments laid together without twist ("zero-twist yarn"), filaments laid together with a degree of twist, single filament with or without twist ("monofilament"), etc. The yarn may or may not be texturized. Suitable fabrics may likewise include, for instance, woven fabrics, knit fabrics, nonwoven fabrics (e.g., spunbond webs, meltblown webs, bonded carded webs, wet-laid webs, airlaid webs, coform webs, hydraulically entangled webs, etc.), and so forth.

Fibers formed from the thermoplastic composition may generally have any desired configuration, including monocomponent and multicomponent (e.g., sheath-core configuration, side-by-side configuration, segmented pie configuration, island-in-the-sea configuration, and so forth). In some embodiments, the fibers may contain one or more additional polymers as a component (e.g., bicomponent) or constituent (e.g., biconstituent) to further enhance strength and other mechanical properties. For instance, the thermoplastic composition may form a sheath component of a sheath/core bicomponent fiber, while an additional polymer may form the core component, or *vice versa.* The additional

polymer may be a thermoplastic polymer such as polyesters, e.g., polylactic acid, polyethylene terephthalate, polybutylene terephthalate, and so forth; polyolefins, e.g., polyethylene, polypropylene, polybutylene, and so forth; polytetrafluoroethylene; polyvinyl acetate; polyvinyl chloride acetate; polyvinyl butyral; acrylic resins, e.g., polyacrylate, polymethylacrylate, polymethylmethacrylate, and so forth; polyamides, e.g., nylon; polyvinyl chloride; polyvinylidene chloride; polystyrene; polyvinyl alcohol; and polyurethanes.

When employed, the fibers can deform upon the application of strain, rather than fracture. The fibers may thus continue to function as a load bearing member even after the fiber has exhibited substantial elongation. In this regard, the fibers of the present invention are capable of exhibiting improved "peak elongation properties, i.e., the percent elongation of the fiber at its peak load. For example, the fibers of the present invention may exhibit a peak elongation of about 50% or more, in some embodiments about 100% or more, in some embodiments from about 200% to about 1500%, and in some embodiments, from about 400% to about 800%, such as determined in accordance with ASTM D638-10 at 23°C. Such elongations may be achieved for fibers having a wide variety of average diameters, such as those ranging from about 0.1 to about 50 micrometers, in some embodiments from about 1 to about 40 micrometers, in some embodiments from about 2 to about 25 micrometers, and in some embodiments, from about 5 to about 15 micrometers.

While possessing the ability to extend under strain, the fibers of the present invention can also remain relatively strong. For example, the fibers may exhibit a peak tensile stress of from about 25 to about 500 Megapascals ("MPa"), in some embodiments from about 50 to about 300 MPa, and in some embodiments, from about 60 to about 200 MPa, such as determined in accordance with ASTM D638-10 at 23°C. Another parameter that is indicative of the relative strength of the fibers of the present invention is "tenacity", which indicates the tensile strength of a fiber expressed as force per unit linear density. For example, the fibers of the present invention may have a tenacity of from about 0.75 to about 6.0 grams-force ("$g_f$") per denier, in some embodiments from about 1.0 to about 4.5 $g_f$ per denier, and in some embodiments, from about 1.5 to about 4.0 $g_f$ per denier. The denier of the fibers may vary depending on the desired application. Typically, the fibers are formed to have a denier per filament (i.e., the unit of linear density equal to the mass in grams per 9000 meters of fiber) of less than about 6, in some embodiments less than about 3, and in some embodiments, from about 0.5 to about 3.

If desired, the polymeric material of the present invention may be subjected to one or more additional processing steps, before and/or after being drawn. Examples of such processes include, for instance, groove roll drawing, embossing, coating, etc. In certain embodiments, the polymeric material may also be annealed to help ensure that it retains the desired shape. Annealing typically occurs at or above the glass transition temperature of the polymer matrix, such as at from about 40° to about 120°C, in some embodiments from about 50°C to about 100°C, and in some embodiments, from about 70°C to about 90°C. The polymeric material may also be surface treated using any of a variety of known techniques to improve its properties. For example, high energy beams (e.g., plasma, x-rays, e-beam, etc.) may be used to remove or reduce any skin layers, to change the surface polarity, porosity, topography, to embrittle a surface layer, etc. If desired, such surface treatment may be used before and/or drawing of the thermoplastic composition.

In certain embodiments of the present invention, the polymeric material may be incorporated into a fabric (e.g., woven, knit, or nonwoven fabric). The entire fabric may be formed from fibers of the polymeric material, or the fabric may be a composite of which the fibers are used in a component and/or a laminate in which the fibers are used in a layer. In any event, the fabric may sometimes be a composite that employs additional material(s) in conjunction with fibers of the polymeric material of the present invention. Any of a variety of materials may generally be employed in combination with the polymeric material of the present invention as is known in the art. For instance, textile fibers may be used in certain embodiments. Particularly suitable textile fibers include generally inelastic textile fibers, such as those formed from cotton, wool, bast, silk, aromatic polyamides (e.g., Nomex® or Kevlar®), aliphatic polyamides (e.g., nylon), rayon, lyocell, etc.; elastic fibers, such as those formed from elastoesters (e.g., REXE™ from Teijin), lastol (e.g., Dow XLA™), spandex (e.g., Lycra® from DuPont), etc.; as well as combinations of two or more types of textile fibers. "Spandex" is an elastic textile fiber formed from segmented polyurethane typically interspersed with relatively soft segments of polyethers, polyesters, polycarbonates, etc. Likewise, "elastoester" is an elastic textile fiber formed from a polyether/polyester blend and "lastol" is an elastic textile fiber formed from a crosslinked ethylene/$\alpha$-olefin copolymer. Elastic textile fibers are particularly suitable for employed to fabrics that have a stretch-like characteristic.

In one particular embodiment, for example, the fabric is a woven or knit composite that contains yarns formed from a combination of fibers of the polymeric material and textile fibers (e.g., elastic fibers). A stretchable composite fabric can, for instance, be formed from yarns formed from elastic textile fibers and yarns formed from fibers of the present invention, which may be relatively inelastic in nature. In a woven fabric, for instance, the elastic yarns may be oriented in the direction in that the stretch will exist, such as the filling yarn in weft stretch fabrics. Alternatively, the fabric can be formed from yarns that are themselves a composite of fibers of the present invention and textile fibers (e.g., elastic fibers). Stretchable composite yarns may, for instance, be formed by single or double wrapping of elastic fibers with a yarn formed from fibers of the present invention, covering (i.e., core spinning) of an elastic fiber with staple fibers formed according to the present invention, intermingling and entangling elastic yarns and yarns formed from the fibers

of the present invention (e.g., with an air jet), twisting elastic fibers and yarns formed from fibers of the present invention, etc. Composite fabrics may also be formed that employ a combination of textile yarns and yarns formed from a blend of textile fibers and fibers of the present invention.

III. Energy Absorbing Member

The manner in which the polymeric material of the present invention is formed into an energy absorbing member may vary. In certain embodiments, for example, the energy absorbing member is formed entirely from the polymeric material of the present invention. In other embodiments, however, the energy absorbing member may include the polymeric material as one layer or component and one or more additional layers or components of material for a variety of purposes, such as for additional energy absorption, insulation, barrier properties, or as a covering. The additional material(s) may include other conventional types of materials, such as polymeric foams, films or sheets, nonwoven webs, fiberglass materials, cellulosic materials, scrims, foils, etc.

In one particular embodiment, for example, the energy absorbing member may be a laminate structure that contains the polymeric material of the present invention and one or more additional layers. For example, the laminate structure may contain an exterior shell layer facing away from the part to be protected (e.g., body part) and a polymeric material positioned adjacent to the shell layer and facing towards the part to be protected. The shell layer may be formed of a material having a high tensile strength, such as fibers formed from glass, graphite, para-aramid (e.g. Kevlar®), ultrahigh molecular weight polyolefin (e.g., Spectra®), etc., metal sheets, ceramic sheets, and so forth. While having a high degree of strength, the materials of the shell layer may also be relatively stiff and thus have a risk of breaking into pieces and threatening injury. In this regard, the polymeric material of the present invention, which is highly collapsible and ductile, can be employed in the laminate structure to absorb energy without breaking into pieces. Referring to Fig. 3, for example, one particular embodiment of a laminate energy absorbing member 200 is shown that contains a polymeric material 220 positioned adjacent to an exterior shell layer 212. In the illustrated embodiment, the polymeric material 220 is relatively flat; however, it should be understood that any shape or geometric configuration may be employed. If desired, an interior shell layer 214, which may be formed from a material such as described above, may also be positioned adjacent to the polymeric material 220 so that the polymeric material 220 serves as a core layer sandwiched between two shell layers.

Various other layers and/or material can also be incorporated into the laminated energy absorbing member. For example, in certain embodiments, a shock absorbing pad can be positioned between the polymeric material and the polymeric material to help further enhance energy absorption. The shock absorbing pad may be formed from conventional material, such as a foamed material, or from the polymeric material of the present invention. In Fig. 4, for instance, one embodiment of a laminated energy absorbing member 300 is shown that contains a polymeric material 220 positioned between shell layers 212 and 214. In this embodiment, a first shock absorbing pad 213 is also positioned between the shell layer 212 and the polymeric material 220, and a second shock absorbing pad 215 is also positioned between the shell layer 214 and the polymeric material 220. In yet other embodiments, strength-enhancing fibers can be incorporated into the layer containing the polymeric material (e.g., core layer) to help further improve the ability of the member to absorb energy. In Fig. 5, for instance, an energy absorbing member 400 is shown that contains a core layer of a polymeric material 220 positioned between shell layers 212 and 214. The core layer also contains a plurality of strength-enhancing fibers 230 (e.g., Kevlar® fibers). It is normally desired that the fibers are positioned in such a manner that, should they break or shatter, they do not penetrate or contact the part to be protected. In this regard, the fibers 230 in the embodiment of Fig. 5 are above the polymeric material 220 so that they are not adjacent to the shell layer 220.

Regardless of its particular construction, the energy absorbing member may be used in a variety of different types of articles. For example, the energy absorbing member may be used in protective gear, whether forming the entire portion of the gear or simply a component (e.g., pad) thereof. When used in protective gear, the energy absorbing member may be positioned adjacent to a body part (e.g., chest, leg, arm, head, etc.) so that it can help reduce the risk of trauma caused by pressure or sudden impacts. Various examples of protective gear that may include the energy absorbing member of the present invention may include, for instance, body armor, bullet-proof vests or jackets, clothing or other apparel used for riot control, corrections activities, apparel or equipment used in connection with martial arts, helmets, shin guards, elbow guards, gloves, ski boots, snowboarding boots, motorcycle gear, skates (e.g., hockey skates, figure skates, racing skates, inline skates, etc.), athletic footwear, orthopedic casts or braces, and so forth.

Referring to Fig. 1, for instance, one embodiment of protective gear that may be formed in accordance with the present invention is shown in the form of a shirt 10. The shirt 10 is designed to be worn alone or under or over another garment, and generally includes a vest 14 that covers the front and back of a torso, sleeves 16, and a plurality of pads 18 positioned to protect the soft tissue and vital organs. The energy absorbing member of the present invention may be used to form the vest 14, pads 18, and/or sleeves 16. In one embodiment, for instance, the energy absorbing member is used to form the pads 18, while a lightweight mesh-like structure is used to form the vest 14 and sleeves 16. Yet

another embodiment of protective gear is shown in Fig. 2 as a bicycle or sports helmet 100. In this embodiment, the entire helmet is formed from an energy absorbing member 112. Of course, it should be understood that different portions of the helmet 100 may be protected in different ways. It is known, for example, that the temples of the skull are very susceptible to impact injury, while the forehead is less so due to its greater thickness. Thus, in certain embodiments, the energy absorbing member may be employed at a temple zone 122, but not necessarily at a frontal zone 124.

Energy absorbing members that include the polymeric material may be employed in a wide variety of articles within any particular application. For example, when considering automotive applications, the polymeric material may be employed in an energy absorbing member as a fibrous articles or as solid moldings. By way of example, energy absorbing members can also enhance comfort and/or aesthetics of a vehicle (e.g., coverings and/or paddings, seat coverings, backings for seat coverings, carpeting, coverings for seat belts, trunk floor coverings and liners, etc.), and energy absorbing members that can also provide general temperature and/or noise insulation (e.g., column padding, door trim pads, hood liners, bodywork parts, etc.

Solid moldings including the polymeric material can be utilized in automotive energy absorbing members. For instance, the polymeric material can be encompassed in passive safety components such as crumple zones on the rear, front, and/or sides of a vehicle; within the safety cell of the automobile, as a component of the airbag or steering wheel (e.g., a collapsible steering column); as a cargo barrier; or as a component of a pedestrian safety system (e.g., as a component of the bumpers, hood, window frame, etc.).

Such broad-based application of the polymeric material is applicable to a wide variety of fields, and is not intended to be in any way limited to the automotive industry. For instance, the polymeric material can be used in energy absorbing members throughout the transportation industry including, without limitation, air and space applications (e.g., airplanes, helicopters, space transports, military aerospace devices, etc.), marine applications (boats, ships, recreational vehicles), trains, and so forth.

The present invention may be better understood with reference to the following examples.

## Test Methods

*High Speed Puncture Test:*

A test may be performed to measure impact properties after being subjected to a high speed puncture in accordance with ASTM D3763-10 at a temperature of 23°C or -25°C (±2°C), and at relative humidity of 50% (±10%). An Instron Dynatup 9250HV high impact tester (with data acquisition system) may be employed to perform the test. The test speed may be 3.3 or 12.5 meters per second, the specimen size may be 102 mm x 127 mm, and the Tup diameter may be 12.7 mm. The average deflection at peak load (mm), average peak load (N), average energy at peak load (J), and average total energy (J) are determined. The total energy is determined from the load/deflection curve at the point where the load returns to zero.

*Notched Charpy Impact Strength:*

Impact strength may be determined in accordance with ASTM D6110-10 at a temperature of 23°C or 0°C (±2°C), and at relative humidity of 50% (±10%). The sample may have a width of about 3.1 mm, the span may be 101.6 mm, and the depth under the notch may be about 10.2 mm. The pendulum may have a capacity of 2.7 Joules. Impact strength is calculated by dividing impact energy in kilojoules by the area under the notch (square meters) with higher numbers representing tougher materials.

*Melt Flow Rate:*

The melt flow rate ("MFR") is the weight of a polymer (in grams) forced through an extrusion rheometer orifice (0.0825-inch diameter) when subjected to a load of 2160 grams in 10 minutes, typically at 190°C, 210°C, or 230°C. Unless otherwise indicated, melt flow rate is measured in accordance with ASTM Test Method D1239 with a Tinius Olsen Extrusion Plastometer.

*Thermal Properties:*

The glass transition temperature ($T_g$) may be determined by dynamic mechanical analysis (DMA) in accordance with ASTM E1640-09. A Q800 instrument from TA Instruments may be used. The experimental runs may be executed in tension/tension geometry, in a temperature sweep mode in the range from -120°C to 150°C with a heating rate of 3"C/min. The strain amplitude frequency may be kept constant (2 Hz) during the test. Three (3) independent samples may be tested to get an average glass transition temperature, which is defined by the peak value of the tan $\delta$ curve,

wherein tan δ is defined as the ratio of the loss modulus to the storage modulus (tan δ = E"/E').

The melting temperature may be determined by differential scanning calorimetry (DSC). The differential scanning calorimeter may be a DSC Q100 Differential Scanning Calorimeter, which may be outfitted with a liquid nitrogen cooling accessory and with a UNIVERSAL ANALYSIS 2000 (version 4.6.6) analysis software program, both of which are available from T.A. Instruments Inc. of New Castle, Delaware. To avoid directly handling the samples, tweezers or other tools may be used. The samples may be placed into an aluminum pan and weighed to an accuracy of 0.01 milligram on an analytical balance. A lid may be crimped over the material sample onto the pan. Typically, the resin pellets may be placed directly in the weighing pan.

The differential scanning calorimeter may be calibrated using an indium metal standard and a baseline correction may be performed, as described in the operating manual for the differential scanning calorimeter. A material sample may be placed into the test chamber of the differential scanning calorimeter for testing, and an empty pan may be used as a reference. All testing may be run with a 55-cubic centimeter per minute nitrogen (industrial grade) purge on the test chamber. For resin pellet samples, the heating and cooling program is a 2-cycle test that began with an equilibration of the chamber to -30°C, followed by a first heating period at a heating rate of 10°C per minute to a temperature of 200°C, followed by equilibration of the sample at 200°C for 3 minutes, followed by a first cooling period at a cooling rate of 10°C per minute to a temperature of -30°C, followed by equilibration of the sample at -30°C for 3 minutes, and then a second heating period at a heating rate of 10°C per minute to a temperature of 200°C. For fiber samples, the heating and cooling program may be a 1-cycle test that begins with an equilibration of the chamber to -25°C, followed by a heating period at a heating rate of 10°C per minute to a temperature of 200°C, followed by equilibration of the sample at 200°C for 3 minutes, and then a cooling period at a cooling rate of 10°C per minute to a temperature of -30°C. All testing may be run with a 55-cubic centimeter per minute nitrogen (industrial grade) purge on the test chamber.

The results may be evaluated using the UNIVERSAL ANALYSIS 2000 analysis software program, which identifies and quantifies the glass transition temperature ($T_g$) of inflection, the endothermic and exothermic peaks, and the areas under the peaks on the DSC plots. The glass transition temperature may be identified as the region on the plotline where a distinct change in slope occurred, and the melting temperature may be determined using an automatic inflection calculation.

*Expansion Ratio, Density, and Percent Pore Volume:*

To determine expansion ratio, density, and percent pore volume, the width ($W_i$) and thickness ($T_i$) of the specimen may be initially measured prior to drawing. The length ($L_i$) before drawing may also be determined by measuring the distance between two markings on a surface of the specimen. Thereafter, the specimen may be drawn to initiate voiding. The width ($W_f$), thickness ($T_f$), and length ($L_f$) of the specimen may then be measured to the nearest 0.01 mm utilizing Digimatic Caliper (Mitutoyo Corporation). The volume ($V_i$) before drawing may be calculated by $W_i \times T_i \times L_i = V_i$. The volume ($V_f$) after drawing may also be calculated by $W_f \times T_f \times L_f = V_f$. The expansion ratio (Φ) may be calculated by $\Phi = V_f/V_i$; the density ($P_f$) may be calculated by: $P_f = P_i/\Phi$, where $P_i$ is density of precursor material; and the percent pore volume (% $V_v$) may be calculated by: $\%V_v = (1 - 1/\Phi) \times 100$.

*Moisture Content:*

Moisture content may be determined using an Arizona Instruments Computrac Vapor Pro moisture analyzer (Model No. 3100) in substantial accordance with ASTM D 7191-05, which is incorporated herein in its entirety by reference thereto for all purposes. The test temperature (§X2.1.2) may be 130°C, the sample size (§X2.1.1) may be 2 to 4 grams, and the vial purge time (§X2.1.4) may be 30 seconds. Further, the ending criteria (§X2.1.3) may be defined as a "prediction" mode, which means that the test is ended when the built-in programmed criteria (which mathematically calculates the end point moisture content) is satisfied.

## EXAMPLE 1

A thermoplastic composition was formed from 85.3 wt.% polylactic acid (PLA 6201D, Natureworks®), 9.5 wt.% of a microinclusion additive, 1.4 wt.% of a nanoinclusion additive, and 3.8 wt.% of an internal interfacial modifier was demonstrated. The microinclusion additive was Vistamaxx™ 2120 (ExxonMobil), which is a polypropylene-polyethylene copolymer elastomer with a melt flow rate of 29 g/10 min (190°C, 2160 g) and a density of 0.866 g/$cm^3$. The nanoinclusion additive was poly(ethylene-co-methyl acrylate-co-glycidyl methacrylate) (Lotader® AX8900, Arkema) having a melt flow rate of 5-6 g/10 min (190°C/2160 g), a glycidyl methacrylate content of 7 to 11 wt.%, methyl acrylate content of 13 to 17 wt.%, and ethylene content of 72 to 80 wt.%. The internal interfacial modifier was PLURIOL® WI 285 Lubricant from BASF, which is a polyalkylene glycol functional fluid. The polymers were fed into a co-rotating, twin-screw extruder (ZSK-30, diameter of 30 mm, length of 1328 millimeters) for compounding that was manufactured by Werner and Pfleiderer

Corporation of Ramsey, New Jersey. The extruder possessed 14 zones, numbered consecutively 1-14 from the feed hopper to the die. The first barrel zone #1 received the resins via gravimetric feeder at a total throughput of 15 pounds per hour. The PLURIOL® WI285 was added via injector pump into barrel zone #2. The die used to extrude the resin had 3 die openings (6 millimeters in diameter) that were separated by 4 millimeters. Upon formation, the extruded resin was cooled on a fan-cooled conveyor belt and formed into pellets by a Conair pelletizer. The extruder screw speed was 200 revolutions per minute ("rpm"). The pellets were then flood fed into a signal screw extruder heated to a temperature of 212°C where the molten blend exited through 4.5 inch width slit die and drawn to a film thickness ranging from 0.45 to 0.48 mm. The films were stretched in the machine direction to about 100% to initiate cavitation and void formation (speed of 50 millimeters per minute) using a MTS 810 hydraulic tensile frame.

Once formed, the material was subjected to a high speed puncture test in accordance with ASTM D3763-10 and then tested for the average deflection of the material at peak load (mm), average peak load (N), average energy at peak load (J), and average total energy. The tests were conducted at speeds of 3.3 m/s and 12.5 m/s, and a temperature of 23°C and -25°C. A control sample was also tested that was made from a medium impact polypropylene-copolymer (Pro-fax™ SV954, Basell). The results are set forth below in Tables 1-4.

**Table 1: Impact Properties (Speed of 3.3 m/s, Temp. of 23°C)**

| Example | Avg. Thickness (mm) | Avg. Deflection at Peak Load (mm) | Avg. Peak Load (N) | Avg. Energy at Peak Load (J) | Avg. Total Energy (J) |
|---|---|---|---|---|---|
| 1 | 0.461 | 16.4 | 452 | 3.20 | 3.80 |
| Control | 0.322 | 12.3 | 238 | 1.35 | 1.47 |

**Table 2: Impact Properties (Speed of 12.5 m/s, Temp. of 23°C)**

| Example | Avg. Thickness (mm) | Avg. Deflection at Peak Load (mm) | Avg. Peak Load (N) | Avg. Energy at Peak Load (J) | Avg. Total Energy (J) |
|---|---|---|---|---|---|
| 1 | 0.471 | 16.1 | 492 | 3.15 | 4.63 |
| Control | 0,324 | 12.8 | 251 | 1.37 | 1.66 |

**Table 3: Impact Properties (Speed of 3.3 m/s, Temp. of -25°C)**

| Example | Avg. Thickness (mm) | Avg. Deflection at Peak Load (mm) | Avg. Peak Load (N) | Avg Energy at Peak Load (J) | Avg. Total Energy (J) |
|---|---|---|---|---|---|
| 1 | 0.457 | 12.7 | 492 | 2.14 | 2.28 |
| Control | 0.330 | 12.3 | 358 | 1.90 | 2.15 |

**Table 4: Impact Properties (Speed of 12.5 m/s, Temp. of -25°C)**

| Example | Avg. Thickness (mm) | Avg. Deflection at Peak Load (mm) | Avg. Peak Load (N) | Avg. Energy at Peak Load (J) | Avg. Total Energy (J) |
|---|---|---|---|---|---|
| 1 | 0.457 | 10.6 | 373 | 1.23 | 1.60 |
| Control | 0.320 | 10.4 | 306 | 1.28 | 1.59 |

## EXAMPLE 2

A thermoplastic composition was formed from 85.3 wt.% polylactic acid (PLA 6201D, Natureworks®), 9.5 wt.% of Vistamaxx™ 2120, 1.4 wt.% of Lotader® AX8900, and 3.8 wt.% of PLURIOL® WI 285 was demonstrated. The

polymers were fed into a co-rotating, twin-screw extruder (ZSK-30, diameter of 30 mm, length of 1328 millimeters) for compounding that was manufactured by Werner and Pfleiderer Corporation of Ramsey, New Jersey. The extruder possessed 14 zones, numbered consecutively 1-14 from the feed hopper to the die. The first barrel zone #1 received the resins *via* gravimetric feeder at a total throughput of 15 pounds per hour. The PLURIOL® WI285 was added via injector pump into barrel zone #2. The die used to extrude the resin had 3 die openings (6 millimeters in diameter) that were separated by 4 millimeters. Upon formation, the extruded resin was cooled on a fan-cooled conveyor belt and formed into pellets by a Conair pelletizer. The extruder screw speed was 200 revolutions per minute ("rpm"). The pellets were then fed to into an injection molder (Boy 22D) and injected into an ASTM test mold to create bars with a thickness of 3 mm, width of 12.7 mm and length of 127 mm. The bars were then elongated to 60% to initiate cavitation and void formation (speed of 50 millimeters per minute) using a MTS 810 hydraulic tensile frame. The bars were then trimmed back to the ~127 mm length to remove the non-voided portion of the bar.

Once formed, the material was subjected to a notched Charpy impact resistance test in accordance with ASTM D6110-10 to determine the Charpy impact strength (kJ/m$^2$). The tests were conducted at a temperature of 23°C and 0°C. Control samples were also tested that were made from a acrylonitrile-butadiene-styrene copolymer (Terluran® GP-22, BASF) ("Control Sample 1") and a medium impact polypropylene-copolymer (Pro-fax™ SV954, Basell) ("Control Sample 2"). The results are set forth below in Table 5.

**Table 5: Impact Strength**

| Example | Avg. Charpy Impact Strength at 23°C (J/m) | Avg. Charpy Impact Strength at 23°C (kJ/m$^2$) | Avg. Charpy Impact Strength at 0°C (J/m) | Avg. Charpy Impact Strength at 0°C (kJ/m$^2$) |
|---|---|---|---|---|
| 1 | 545 | 53.70 | 320 | 31.40 |
| Control 1 | 193 | 19.00 | 132 | 12.90 |
| Control 2 | 85 | 8.37 | 31 | 3.02 |

## EXAMPLE 3

The ability to form films from a blend of 85.3 wt.% polylactic acid (PLA 6201D, Natureworks®), 9.5 wt.% of Vistamaxx™ 2120, 1.4 wt.% of Lotader® AX8900, and 3.8 wt.% of PLURIOL® WI 285. The polymers were fed into a co-rotating, twin-screw extruder (ZSK-30, diameter of 30 mm, length of 1328 millimeters) for compounding that was manufactured by Werner and Pfleiderer Corporation of Ramsey, New Jersey. The extruder possessed 14 zones, numbered consecutively 1-14 from the feed hopper to the die. The first barrel zone #1 received the resins via gravimetric feeder at a total throughput of 15 pounds per hour. The PLURIOL® WI285 was added via injector pump into barrel zone #2. The die used to extrude the resin had 3 die openings (6 millimeters in diameter) that were separated by 4 millimeters. Upon formation, the extruded resin was cooled on a fan-cooled conveyor belt and formed into pellets by a Conair pelletizer. The extruder screw speed was 200 revolutions per minute ("rpm"). The pellets were then flood fed into a signal screw extruder heated to a temperature of 212°C where the molten blend exited through 4.5 inch width slit die and drawn to a film thickness ranging from 36 μm to 54 μm. The films were stretched in the machine direction to about 100% to initiate cavitation and void formation.

The morphology of the films was analyzed by scanning electron microscopy (SEM) before and after stretching. The results are shown in Figs. 6-9. As shown in Figs. 6-7, the microinclusion additive was initially dispersed in domains having an axial size (in machine direction) of from about 2 to about 30 micrometers and a transverse dimension (in cross-machine direction) of from about 1 to about 3 micrometers, while the nanoinclusion additive was initially dispersed as spherical or spheroidal domains having an axial size of from about 100 to about 300 nanometers. Figs. 8-9 show the film after stretching. As indicated, pores formed around the inclusion additives. The micropores formed around the microinclusion additive generally had an elongated or slit-like shape with a broad size distribution ranging from about 2 to about 20 micrometers in the axial direction. The nanopores associated with the nanoinclusion additive generally had a size of from about 50 to about 500 nanometers.

## EXAMPLE 4

The compounded pellets of Example 1 were dry blended with a third inclusion additive, which was a halloisite clay masterbatch (MacroComp MNH-731-36, MacroM) containing 22 wt.% of a styrenic copolymer modified nanoclay and 78 wt.% polypropylene (Exxon Mobil 3155). The mixing ratio was 90 wt.% of the pellets and 10 wt.% of the clay masterbatch, which provided a total clay content of 2.2%. The dry blend was then flood fed into a signal screw extruder heated to a temperature of 212°C, where the molten blend exited through 4.5 inch width slit die and drawn to a film

thickness ranging from 51 to 58 μm. The films were stretched in the machine direction to about 100% to initiate cavitation and void formation.

The morphology of the films was analyzed by scanning electron microscopy (SEM) before and after stretching. The results are shown in Figs. 10-13. As shown in Figs. 10-11, some of the nanoclay particles (visible as brighter regions) became dispersed in the form of very small domains - i.e., axial dimension ranging from about 50 to about 300 nanometers. The masterbatch itself also formed domains of a micro-scale size (axial dimension of from about 1 to about 5 micrometers). Also, the microinclusion additive (Vistamaxx™) formed elongated domains, while the nanoinclusion additive (Lotader®, visible as ultrafine dark dots) and the nanoclay masterbatch formed spheroidal domains. The stretched film is shown in Figs. 12-13. As shown, the voided structure is more open and demonstrates a broad variety of pore sizes. In addition to highly elongated micropores formed by the first inclusions (Vistamaxx™), the nanoclay masterbatch inclusions formed more open spheroidal micropores with an axial size of about 10 microns or less and a transverse size of about 2 microns. Spherical nanopores are also formed by the second inclusion additive (Lotader®) and third inclusion additive (nanoclay particles).

## Claims

1. An energy absorbing member (14,16,18, 112, 200, 300, 400) comprising a polymeric material (220), wherein the polymeric material is formed from a thermoplastic composition containing a continuous phase that includes a matrix polymer, and further wherein a microinclusion additive and a nanoinclusion additive are dispersed within the continuous phase in the form of discrete domains, wherein a porous network is defined in the material, **characterised in that** the porous network includes a plurality of nanopores having an average cross-sectional dimension of about 800 nanometers or less;
wherein the nanoinclusion additive and the microinclusion additive are polymeric; and
wherein the concentration of the microinclusion additive in the entire thermoplastic composition is from about 1 wt.% to about 20 wt.% and the concentration of the nanoinclusion additive in the entire thermoplastic composition is from about 0.01 wt.% to about 15 wt.%.

2. The energy absorbing member of claim 1, wherein the polymeric material (220) has a notched Charpy impact strength of about 10 kJ/$m^2$ or more, measured at 23°C according ASTM D6110-10; and/or
wherein the total energy absorbed by the polymeric material is about 2 Joules or more, as determined by a high speed puncture test conducted in accordance with ASTM D3763-10 at a speed of 12.5 meters per second and temperature of 23°C; and/or
wherein the deflection at peak load of the polymeric material is about 10 mm or more, as determined by a high speed puncture test conducted in accordance with ASTM D3763-10 at a speed of 12.5 meters per second and temperature of 23°C; and/or
wherein the peak load of the polymeric material is about 250 N or more, as determined by a high speed puncture test conducted in accordance with ASTM D3763-10 at a speed of 12.5 meters per second and temperature of 23°C.

3. The energy absorbing member of any of the foregoing claims, wherein the nanopores have an average cross-sectional dimension of from about 10 to about 100 nanometers; and/or
wherein the total pore volume of the polymeric material is from about 15% to about 80% per cubic centimeter; and/or
wherein the nanopores constitute about 20 vol.% or more of the total pore volume of the polymeric material; and/or
wherein the micro-scale domains have an average axial dimension of from about 0.5 micrometer to about 250 micrometers; and/or
wherein the thermoplastic composition has a density of about 1.2 grams per cubic centimeter or less.

4. The energy absorbing member of any of the foregoing claims, wherein the continuous phase constitutes from about 60 wt.% to about 99 wt.% of the thermoplastic composition; and/or
wherein the nanoinclusion additive constitutes from about 0.05 wt.% to about 10 wt.% of the entire thermoplastic composition.

5. The energy absorbing member of any of the foregoing claims, wherein the matrix polymer includes a polyester or polyolefin; and/or wherein the matrix polymer includes a polyester having a glass transition temperature of about 0°C or more, such as polylactic acid.

6. The energy absorbing member of any of the foregoing claims, wherein the microinclusion additive is a polyolefin, such as a propylene homopolymer, a propylene/α-olefin copolymer, an ethylene/α-olefin copolymer, or a combination

thereof.

7. The energy absorbing member of any of the foregoing claims, wherein the ratio of the solubility parameter for the matrix polymer to the solubility parameter of the microinclusion additive is from about 0.5 to about 1.5, the ratio of the melt flow rate for the matrix polymer to the melt flow rate of the microinclusion additive is from about 0.2 to about 8, and/or the ratio of the Young's modulus of elasticity of the matrix polymer to the Young's modulus of elasticity of the microinclusion additive is from about 1 to about 250.

8. The energy absorbing member of any of the foregoing claims, wherein the nanoinclusion additive is a functionalized polyolefin, such as a polyepoxide.

9. The energy absorbing member of any of the foregoing claims, wherein the thermoplastic composition further comprises an interphase modifier, such as a silicone, a silicone-polyether copolymer, an aliphatic polyester, an aromatic polyester, an alkylene glycol, an alkane diol, an amine oxide, a fatty acid ester, or a combination thereof, preferably in an amount of from about 0.1 wt.% to about 20 wt.% of the composition based on the weight of the continuous phase.

10. The energy absorbing member of any of the foregoing claims, wherein the polymeric material (220) is generally free of gaseous blowing agents.

11. The energy absorbing member of any of the foregoing claims, wherein the porous network further includes micropores, preferably wherein the micropores have an aspect ratio of from about 1 to about 30.

12. The energy absorbing member of any of the foregoing claims, wherein the member is in the form of a fabric, preferably wherein the fabric is a woven or knit fabric that contains a plurality of yarns, wherein at least a portion of the yarns includes the polymeric material.

13. The energy absorbing member of any of claims 1 to 12, wherein the member is formed entirely from the polymeric material; or wherein the polymeric material is a layer or component of the member, preferably wherein the energy absorbing member contains an exterior shell layer (212, 214) positioned adjacent to the polymeric material, more preferably wherein the polymeric material is positioned between the exterior shell layer and an interior shell layer

14. The energy absorbing member of claim 13, wherein the shell layer includes strength-enhancing fibers, a metal sheet, a ceramic sheet, or a combination thereof, preferably wherein the member has a layer that includes the polymeric material and a plurality of strength-enhancing fibers, more preferably wherein the strength-enhancing fibers are positioned above the polymeric material.

15. Protective gear (10, 100) comprising the energy absorbing member (14,16,18, 112, 200, 300, 400) of any of the foregoing claims, wherein the energy absorbing member is configured to be positioned adjacent to a body part, preferably
wherein the energy absorbing member forms only a component of the gear; or
wherein the protective gear is a bullet-proof vest or jacket, body armor, clothing or other apparel used for riot control, corrections activities, apparel or equipment used in connection with martial arts, helmet, shin guard, elbow guard, glove, ski boot, snowboarding boot, motorcycle gear, skate, athletic footwear, orthopedic cast or brace, or a combination thereof.

## Patentansprüche

1. Energieabsorbierendes Element (14, 16, 18, 112, 200, 300, 400), umfassend ein Polymermaterial (220), wobei das Polymermaterial aus einer thermoplastischen Zusammensetzung ausgebildet ist, die eine kontinuierliche Phase enthält, die ein Matrixpolymer beinhaltet, und ferner wobei ein Mikroeinschlusszusatz und ein Nanoeinschlusszusatz in der kontinuierlichen Phase in Form diskreter Bereiche verteilt sind, wobei ein poröses Netz im Material definiert ist, **dadurch gekennzeichnet, dass** das poröse Netz eine Vielzahl von Nanoporen beinhaltet, die eine durchschnittliche Querschnittsabmessung von etwa 800 Nanometern oder weniger aufweisen;
wobei der Nanoeinschlusszusatz und der Mikroeinschlusszusatz polymer sind; und wobei die Konzentration des Mikroeinschlusszusatzes in der gesamten thermoplastischen Zusammensetzung von etwa 1 Gew.-% bis etwa 20 Gew.-% beträgt und die Konzentration des Nanoeinschlusszusatzes in der gesamten thermoplastischen Zusammensetzung von etwa 0,01 Gew.-% bis etwa 15 Gew.-% beträgt.

2. Energieabsorbierendes Element nach Anspruch 1, wobei das Polymermaterial (220) eine Kerbschlagzähigkeit nach Charpy von etwa 10 kJ/$m^2$ oder mehr, gemessen bei 23 °C gemäß ASTM D6110-10 aufweist; und/oder
wobei die gesamte Energie, die durch das Polymermaterial absorbiert wird, etwa 2 Joules oder mehr beträgt, wie durch eine Durchschlagprüfung mit hoher Geschwindigkeit gemäß ASTM D3763-10 mit einer Geschwindigkeit von 12,5 Metern pro Sekunde und einer Temperatur von 23 °C ermittelt, und/oder
wobei die Verformung bei Spitzenlast des Polymermaterials etwa 10 mm oder mehr beträgt, wie durch eine Durchschlagprüfung mit hoher Geschwindigkeit gemäß ASTM D3763-10 mit einer Geschwindigkeit von 12,5 Metern pro Sekunde und einer Temperatur von 23 °C ermittelt, und/oder
wobei die Spitzenlast des Polymermaterials etwa 250 N oder mehr beträgt, wie durch eine Durchschlagprüfung mit hoher Geschwindigkeit gemäß ASTM D3763-10 mit einer Geschwindigkeit von 12,5 Metern pro Sekunde und einer Temperatur von 23 °C ermittelt.

3. Energieabsorbierendes Element nach einem der vorstehenden Ansprüche, wobei die Nanoporen eine durchschnittliche Querschnittsabmessung von etwa 10 bis etwa 100 Nanometer haben; und/oder
wobei das gesamte Porenvolumen des Polymermaterials von etwa 15 % bis etwa 80 % pro Kubikzentimeter beträgt; und/oder
wobei die Nanoporen etwa 20 Gew.-% oder mehr des gesamten Porenvolumens des Polymermaterials darstellen; und/oder
wobei die Mikrobereiche eine durchschnittliche axiale Abmessung von etwa 0,5 Mikrometer bis etwa 250 Mikrometer aufweisen; und/oder
wobei die thermoplastische Zusammensetzung eine Dichte von etwa 1,2 Gramm pro Kubikzentimeter oder weniger aufweist.

4. Energieabsorbierendes Element nach einem der vorstehenden Ansprüche, wobei die kontinuierliche Phase von etwa 60 Gew.-% bis etwa 99 Gew.-% der thermoplastischen Zusammensetzung darstellt; und/oder
wobei der Nanoeinschlusszusatz von etwa 0,05 Gew.-% bis etwa 10 Gew.-% der gesamten thermoplastischen Zusammensetzung darstellt.

5. Energieabsorbierendes Element nach einem der vorstehenden Ansprüche, wobei das Matrixpolymer ein Polyester oder Polyolefin darstellt; und/oder wobei das Matrixpolymer ein Polyester mit einer Glasübergangstemperatur von etwa 0 °C oder mehr beinhaltet, wie z. B. Polymilchsäure.

6. Energieabsorbierendes Element nach einem der vorstehenden Ansprüche, wobei der Mikroeinschlusszusatz ein Polyolefin ist, wie z. B. ein Propylenhomopolymer, ein Propylen/$\alpha$-Olefin-Copolymer, ein Ethylen/$\alpha$-Olefin-Copolymer oder eine Kombination davon.

7. Energieabsorbierendes Element nach einem der vorstehenden Ansprüche, wobei das Verhältnis des Löslichkeitsparameters für das Matrixpolymer zum Löslichkeitsparameter des Mikroeinschlusszusatzes von etwa 0,5 bis etwa 1,5 ist, das Verhältnis der Schmelzflussrate für das Matrixpolymer zur Schmelzflussrate des Mikroeinschlusszusatzes von etwa 0,2 bis etwa 8 ist und/oder das Verhältnis des Young'schen Elastizitätsmoduls des Matrixpolymers zum Young'schen Elastizitätsmodul des Mikroeinschlusszusatzes von etwa 1 bis etwa 250 ist.

8. Energieabsorbierendes Element nach einem der vorstehenden Ansprüche, wobei der Nanoeinschlusszusatz ein funktionalisiertes Polyolefin ist, wie z. B. Polyepoxid.

9. Energieabsorbierendes Element nach einem der vorstehenden Ansprüche, wobei die thermoplastische Zusammensetzung ferner einen Interphasenmodifizierer umfasst, wie z. B. ein Silikon, ein Silikon-Polyether-Copolymer, ein aliphatisches Polyester, ein aromatisches Polyester, ein Alkylenglycol, ein Alkandiol, ein Aminoxid, ein Fettsäurerester oder eine Kombination davon, bevorzugt in einer Menge von etwa 0,1 Gew.-% bis etwa 20 Gew.-% der Zusammensetzung auf Basis des Gewichts der kontinuierlichen Phase.

10. Energieabsorbierendes Element nach einem der vorstehenden Ansprüche, wobei das Polymermaterial (220) im Allgemeinen frei von gasförmigem Treibmittel ist.

11. Energieabsorbierendes Element nach einem der vorstehenden Ansprüche, wobei das poröse Netz ferner Mikroporen beinhaltet, wobei die Mikroporen bevorzugt ein Seitenverhältnis von etwa 1 bis etwa 30 haben.

12. Energieabsorbierendes Element nach einem der vorstehenden Ansprüche, wobei das Element in Form eines Gewebes ist, wobei das Gewebe bevorzugt ein gewebtes oder gestricktes Gewebe ist, das eine Vielzahl von Garnen beinhaltet, wobei mindestens ein Teil der Garne das Polymermaterial beinhaltet.

**13.** Energieabsorbierendes Element nach einem der Ansprüche 1 bis 12, wobei das Element vollständig aus dem Polymermaterial ausgebildet ist; oder wobei das Polymermaterial eine Schicht oder Komponente des Elements ist, wobei das energieabsorbierende Element bevorzugt eine äußere Hüllenschicht (212, 214) enthält, die neben dem Polymermaterial positioniert ist, wobei das Polymermaterial bevorzugter zwischen der äußeren Hüllenschicht und einer inneren Hüllenschicht positioniert ist.

**14.** Energieabsorbierendes Element nach Anspruch 13, wobei die Hüllenschicht festigkeitserhöhende Fasern, ein Metallblech, eine Keramikplatte oder eine Kombination davon beinhaltet, wobei das Element bevorzugt eine Schicht hat, die das Polymermaterial und eine Vielzahl von festigkeitserhöhenden Fasern beinhaltet, und wobei die festigkeitserhöhenden Fasern bevorzugter über dem Polymermaterial positioniert sind.

**15.** Schutzausrüstung (10, 100), umfassend das energieabsorbierende Element (14, 16, 18, 112, 200, 300, 400) nach einem der vorstehenden Ansprüche, wobei das energieabsorbierende Element so konfiguriert ist, dass es neben einem Körperteil positioniert wird,
wobei das energieabsorbierende Element bevorzugt nur eine Komponente der Ausrüstung ausbildet; oder
wobei die Schutzausrüstung eine kugelsichere Weste oder Jacke, Panzerweste, Kleidung oder andere Bekleidung ist, die für die Bekämpfung von Unruhen, Strafvollzugsaktivitäten, Bekleidung oder Ausrüstung, die in Verbindung mit Kampfsportarten verwendet wird, Helme, Scheinbeinschützer, Ellbogenschützer, Handschuhe, Skischuhe, Snowboarding-Schuhe, Motorradausrüstung, Rollschuhe, Sportschuhe, orthopädische Bandagen oder Stützsysteme oder eine Kombination davon verwendet wird.

## Revendications

**1.** Élément absorbant l’énergie (14, 16, 18, 112, 200, 300, 400) comprenant un matériau polymère (220), le matériau polymère étant formé à partir d’une composition thermoplastique contenant une phase continue qui comprend un polymère matriciel, et un additif de microinclusion et un additif de nanoinclusion étant dispersés dans la phase continue sous la forme de domaines discrets, un réseau poreux étant défini dans le matériau, **caractérisé en ce que** le réseau poreux comprend une pluralité de nanopores ayant une dimension en coupe transversale moyenne d’environ 800 nanomètres ou moins ;
l’additif de nanoinclusion et l’additif de microinclusion étant polymères ; et la concentration de l’additif de microinclusion dans l’ensemble de la composition thermoplastique étant d’environ 1 % en poids à environ 20 % en poids et la concentration de l’additif de nanoinclusion dans l’ensemble de la composition thermoplastique étant d’environ 0,01 % en poids à environ 15 % en poids.

**2.** Élément absorbant l’énergie de la revendication 1, dans lequel le matériau polymère (220) présente une résistance aux chocs sur éprouvette entaillée selon Charpy d’environ 10 $kJ/m^2$ ou plus, mesurée à 23 °C selon la norme ASTM D6110-10 ; et/ou
dans lequel l’énergie totale absorbée par le matériau polymère est d’environ 2 Joules ou plus, comme déterminé par un essai de perforation à grande vitesse mené en conformité avec la norme ASTM D3763-10 à une vitesse de 12,5 mètres par seconde et à une température de 23 °C ; et/ou
dans lequel la déformation à un pic de charge du matériau polymère est d’environ 10 mm ou plus, telle que déterminée par un essai de perforation à grande vitesse mené en conformité avec la norme ASTM D3763-10 à une vitesse de 12,5 mètres par seconde et à une température de 23 °C ; et/ou
dans lequel le pic de charge du matériau polymère est d’environ 250 N ou plus, tel que déterminée par un essai de perforation à grande vitesse mené en conformité avec la norme ASTM D3763-10 à une vitesse de 12,5 mètres par seconde et à une température de 23 °C.

**3.** Élément absorbant l’énergie de l’une quelconque des revendications précédentes, dans lequel les nanopores présentent une dimension en coupe transversale moyenne d’environ 10 à environ 100 nanomètres ; et/ou
dans lequel le volume de pore total du matériau polymère est d’environ 15 % à environ 80 % par centimètre cube ; et/ou
dans lequel les nanopores constituent environ 20 % en volume ou plus du volume de pore total du matériau polymère ; et/ou
dans lequel les domaines d’échelle microscopique présentent une dimension axiale moyenne d’environ 0,5 micromètre à environ 250 micromètres ; et/ou
dans lequel la composition thermoplastique présente une masse volumique d'environ 1,2 gramme par centimètre cube ou moins.

4. Élément absorbant l'énergie de l'une quelconque des revendications précédentes, dans lequel la phase continue constitue d'environ 60 % en poids à environ 99 % en poids de la composition thermoplastique ; et/ou
dans lequel l'additif de nanoinclusion constitue d'environ 0,05 % en poids à environ 10 % en poids de l'ensemble de la composition thermoplastique.

5. Élément absorbant l'énergie de l'une quelconque des revendications précédentes, dans lequel le polymère matriciel comprend un polyester ou une polyoléfine ; et/ou dans lequel le polymère matriciel comprend un polyester présentent une température de transition vitreuse d'environ 0 °C ou plus, tel que le polyacide lactique.

6. Élément absorbant l'énergie de l'une quelconque des revendications précédentes, dans lequel l'additif de microinclusion est une polyoléfine, telle qu'un homopolymère de propylène, un copolymère propylène/α-oléfine, un copolymère éthylène/α-oléfine ou une combinaison de ceux-ci.

7. Élément absorbant l'énergie de l'une quelconque des revendications précédentes, dans lequel la rapport entre le paramètre de solubilité pour le polymère matriciel et la paramètre de solubilité de l'additif de microinclusion est d'environ 0,5 à environ 1,5, le rapport entre l'indice de fluidité à chaud du polymère matriciel et l'indice de fluidité à chaud de l'additif de microinclusion est d'environ 0,2 à environ 8, et/ou le rapport entre le module d'élasticité de Young du polymère matriciel et le module d'élasticité de Young de l'additif de microinclusion est d'environ 1 à environ 250.

8. Élément absorbant l'énergie de l'une quelconque des revendications précédentes, dans lequel l'additif de nanoinclusion est une polyoléfine fonctionnalisée, telle qu'un polyépoxyde.

9. Élément absorbant l'énergie de l'une quelconque des revendications précédentes, dans lequel la composition thermoplastique comprend en outre un modificateur d'interphase, tel qu'une silicone, un copolymère silicone-polyéther, un polyester aliphatique, un polyester aromatique, un alkylène glycol, un alcane diol, un oxyde d'amine, un ester d'acide gras ou une combinaison de ceux-ci, de préférence dans une quantité d'environ 0,1 % en poids à environ 20 % en poids de la composition par rapport au poids de la phase continue.

10. Élément absorbant l'énergie de l'une quelconque des revendications précédentes, dans lequel le matériau polymère (220) est généralement dépourvu d'agent gonflant.

11. Élément absorbant l'énergie de l'une quelconque des revendications précédentes, dans lequel le réseau poreux comprend en outre des micropores, les micropores présentant de préférence un facteur de forme d'environ 1 à environ 30.

12. Élément absorbant l'énergie de l'une quelconque des revendications précédentes, l'élément se présentant sous la forme d'une étoffe, l'étoffe étant de préférence une étoffe tissée ou tricotée qui contient une pluralité de fils, au moins une partie des fils comprenant le matériau polymère.

13. Élément absorbant l'énergie de l'une quelconque des revendications 1 à 12, l'élément étant formé entièrement du matériau polymère ; ou le matériau polymère étant une couche ou un composant de l'élément, de préférence l'élément absorbant l'énergie contenant une couche d'enveloppe extérieure (212, 214) positionnée à côté du matériau polymère, de manière davantage préférée le matériau polymère étant positionné entre la couche d'enveloppe extérieure et une couche d'enveloppe intérieure.

14. Élément absorbant l'énergie de la revendication 13, dans lequel la couche d'enveloppe comprend des fibres renforçant la résistance, une feuille métallique, une feuille céramique ou une combinaison de celles-ci, de préférence l'élément ayant une couche qui comprend le matériau polymère et une pluralité de fibres renforçant la résistance, de manière davantage préférée les fibres renforçant la résistance étant positionnées au-dessus du matériau polymère.

15. Équipement de protection (10, 100) comprenant l'élément absorbant l'énergie (14, 16, 18, 112, 200, 300, 400) de l'une quelconque des revendications précédentes, l'élément absorbant l'énergie étant conçu pour être positionné

à côté d'une partie du corps, de préférence
l'élément absorbant l'énergie formant uniquement un composant de l'équipement ; ou
l'équipement de protection étant une veste ou un gilet pare-balle, une armure, un vêtement ou un autre élément vestimentaire utilisé pour la lutte antiémeute, les activités pénitentiaires, un élément vestimentaire ou équipement utilisé en rapport avec les arts martiaux, un casque, un protège-tibia, un protège-coude, un gant, une chaussure de ski, une botte de snowboard, un vêtement de moto, un patin, une chaussure de sport, un plâtre ou une attelle orthopédique ou une combinaison de ceux-ci.

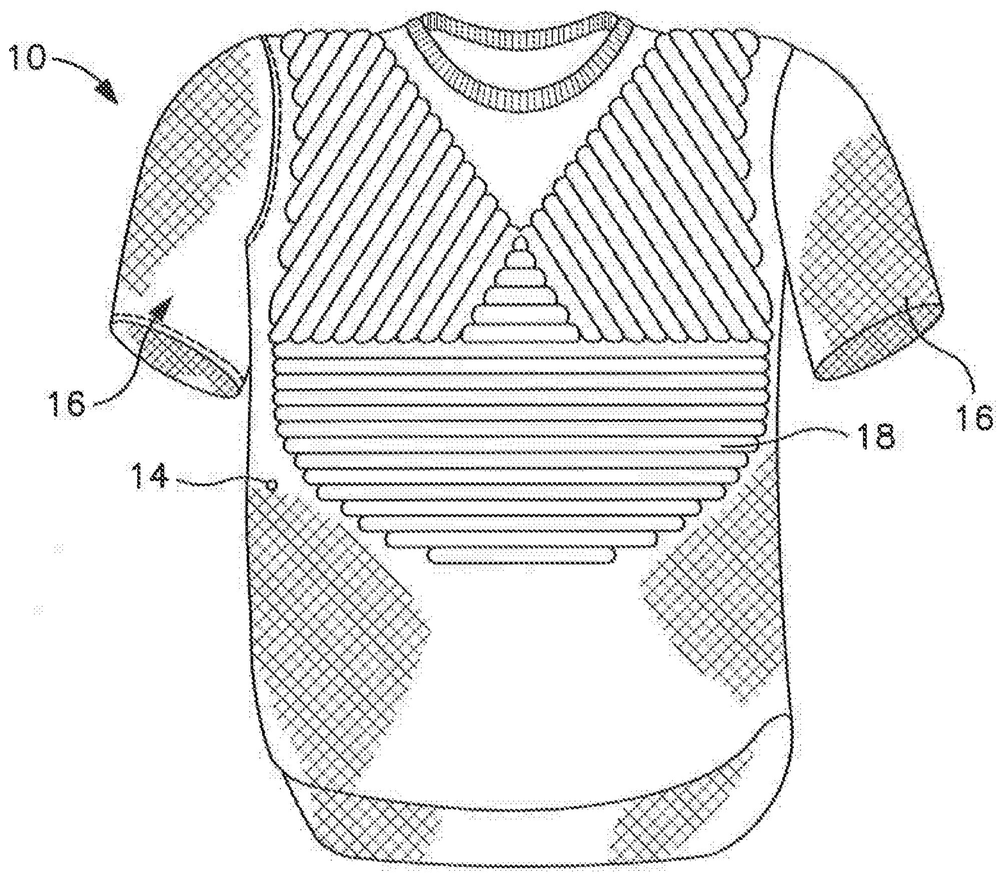


FIG. 1

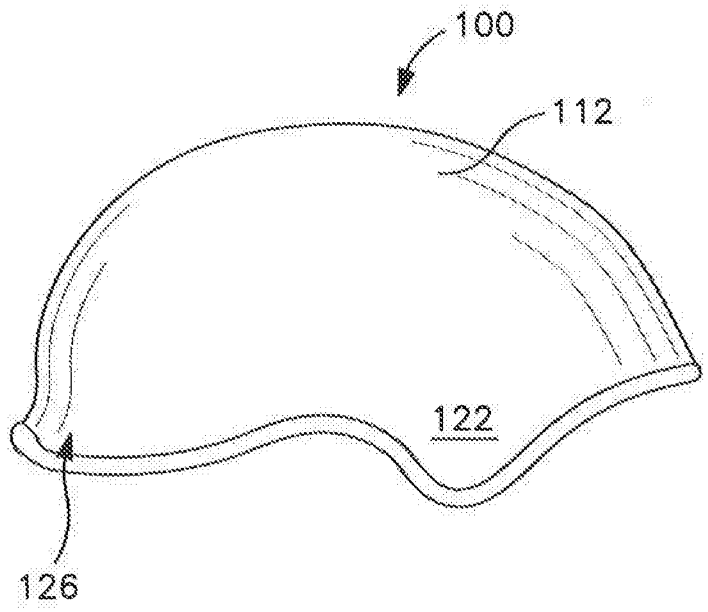


FIG. 2

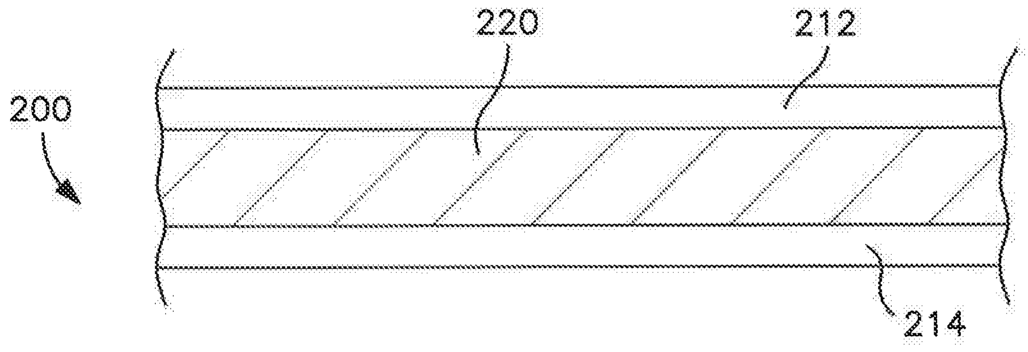


FIG. 3

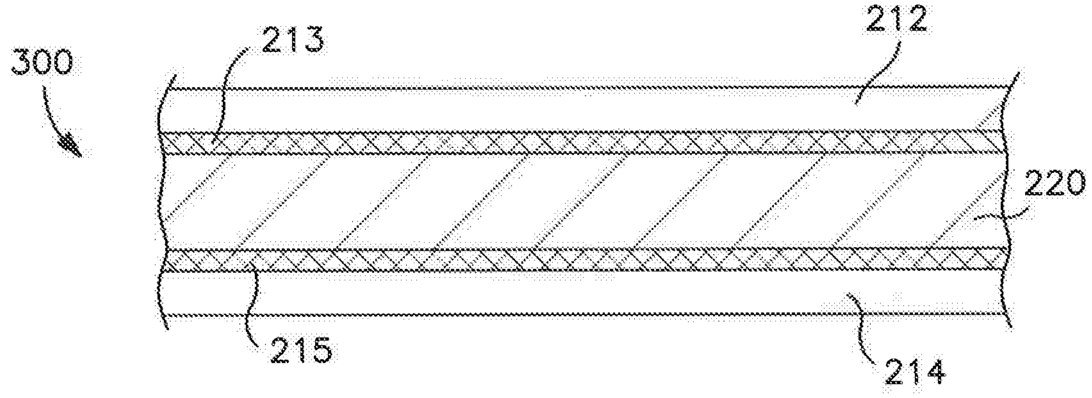


FIG. 4

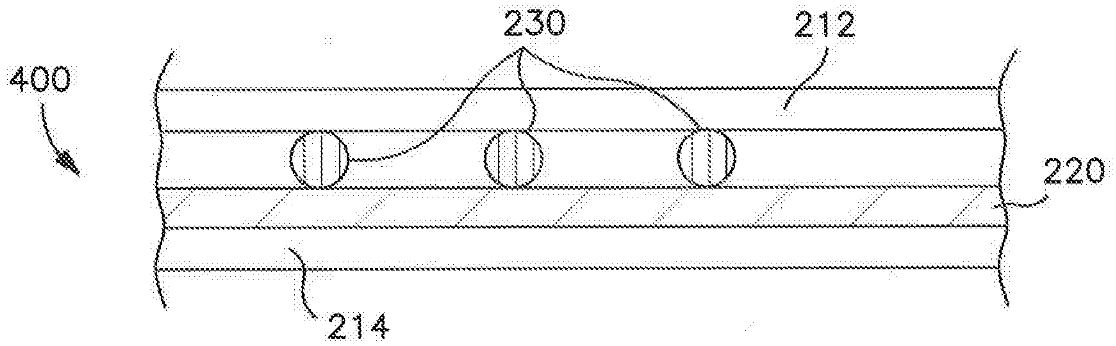


FIG. 5

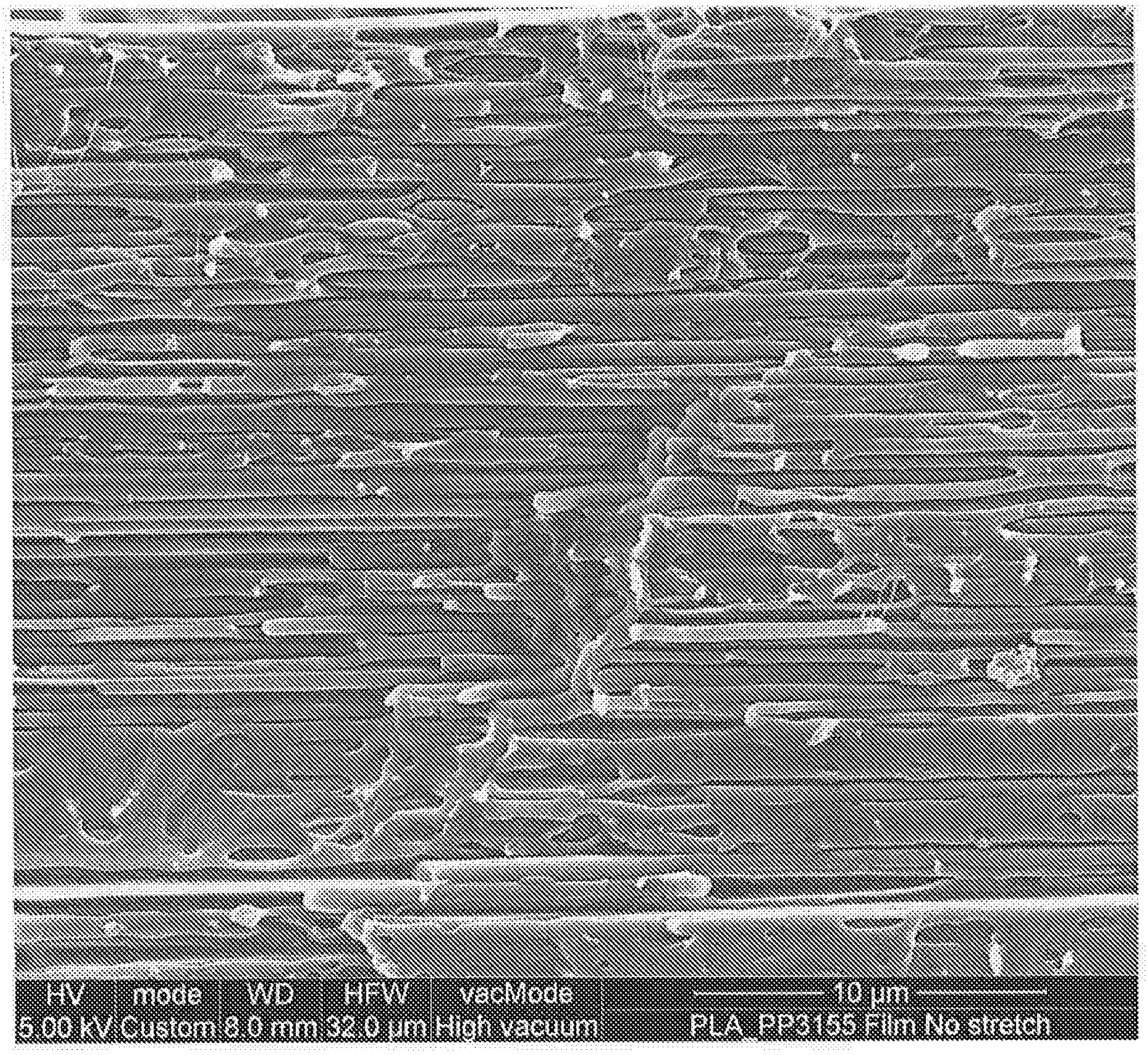
HV
mode
WD
HFW
vacMode
10 µm
5.00 kV
Custom
8.0 mm
32.0 µm
High vacuum
PLA_PP3155 Film No stretch

FIG. 6

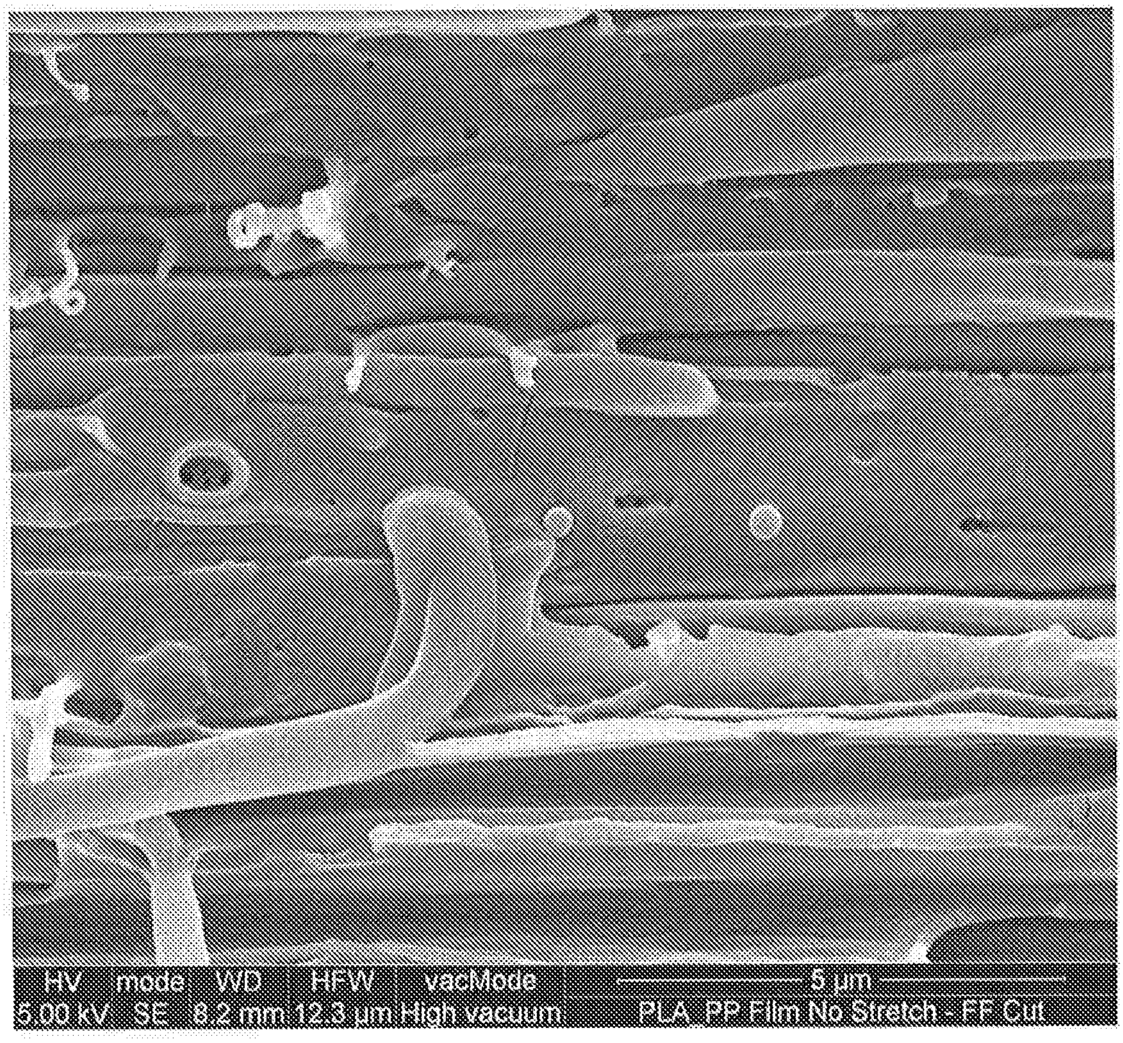
HV mode WD HFW vacMode 5 µm
5.00 kV SE 8.2 mm 12.3 µm High vacuum PLA PP Film No Stretch - FF Cut

FIG. 7

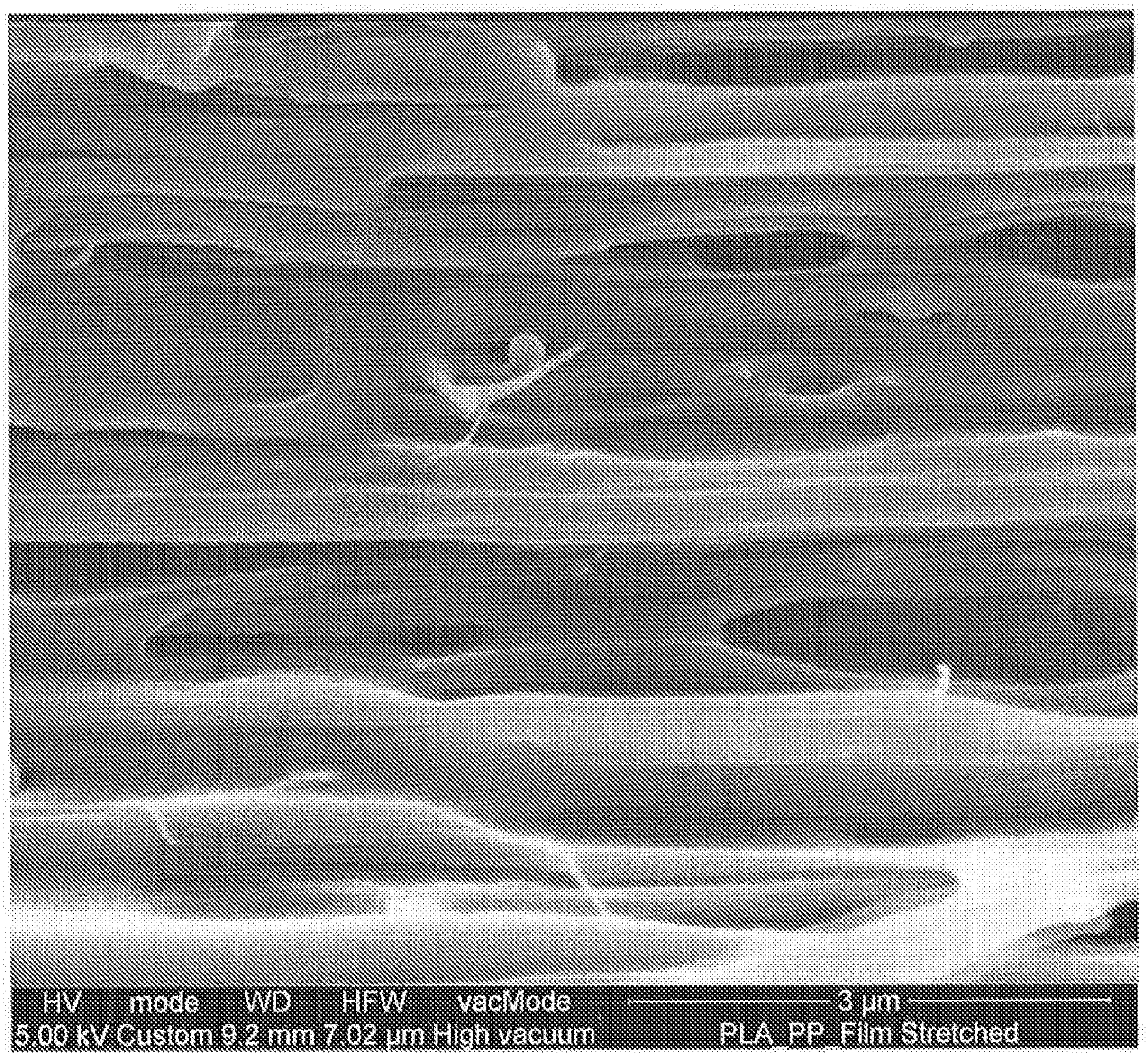
HV mode WD HFW vacMode
3 µm
5.00 kV Custom 9.2 mm 7.02 µm High vacuum
PLA_PP_Film Stretched

FIG. 8

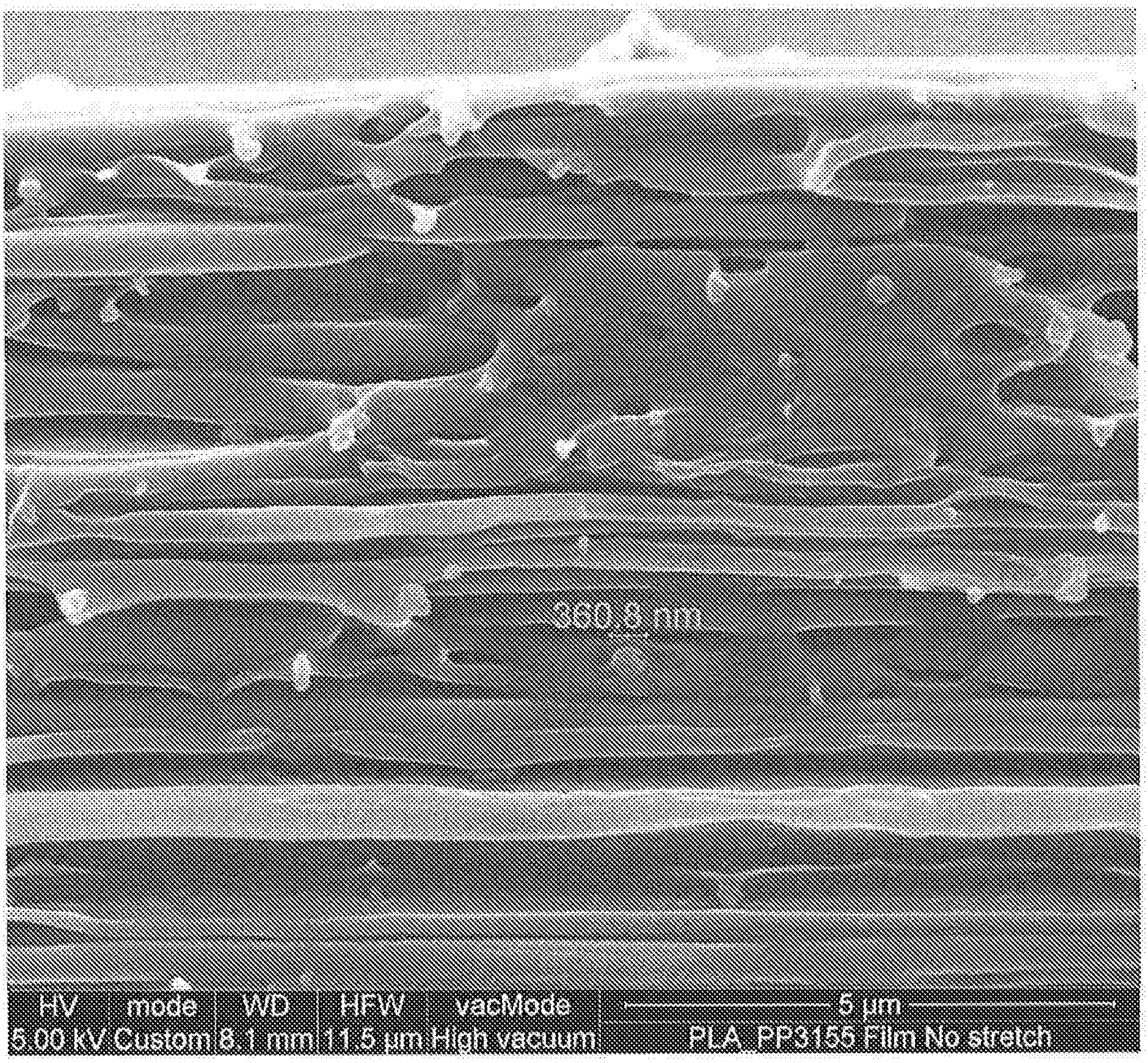
360.8 nm
HV mode WD HFW vacMode 5 µm
5.00 kV Custom 8.1 mm 11.5 µm High vacuum PLA_PP3155 Film No stretch

FIG. 9

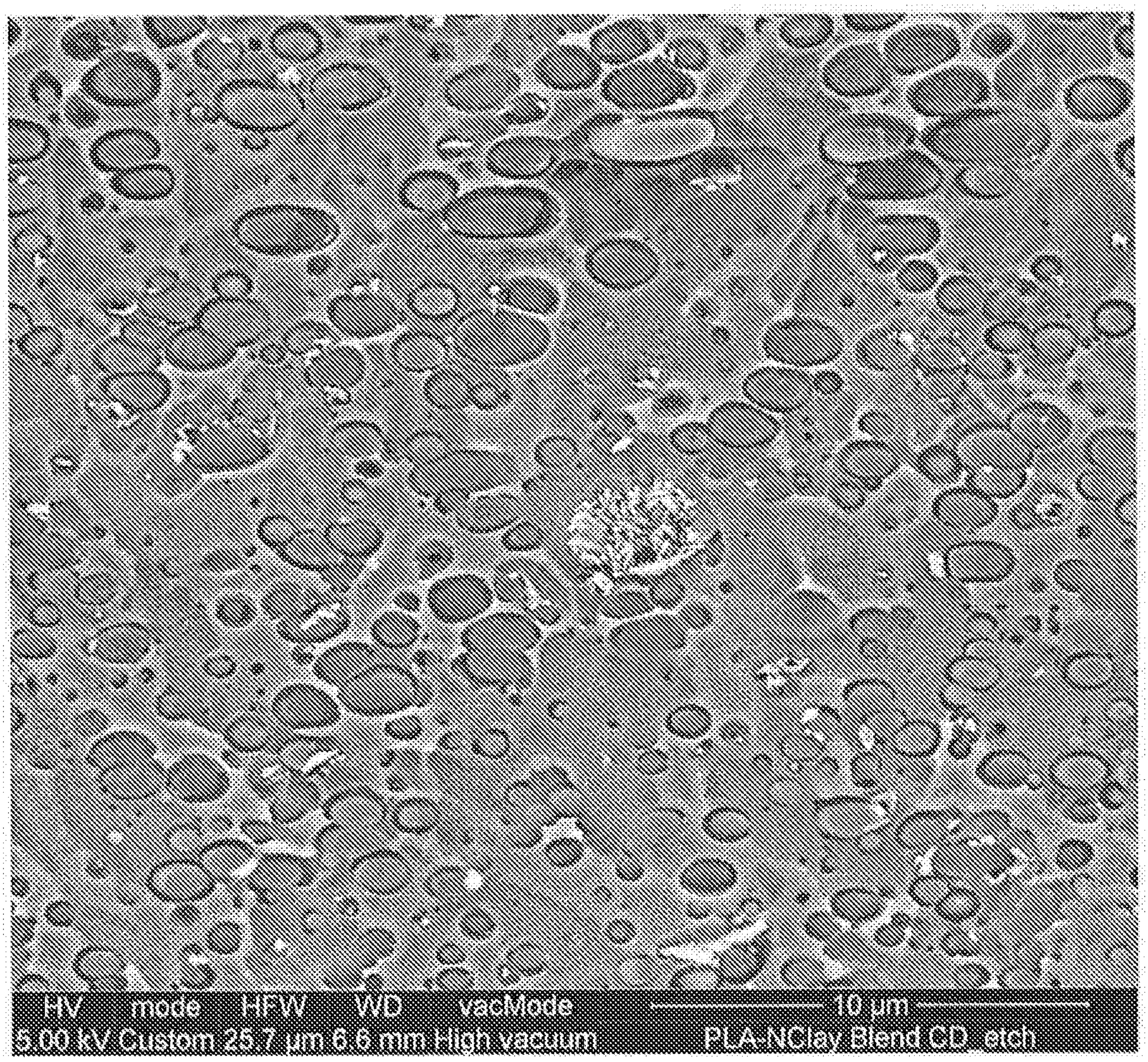
HV mode HFW WD vacMode 10 µm
5.00 kV Custom 25.7 µm 6.6 mm High vacuum PLA-NClay Blend CD_etch

FIG. 10

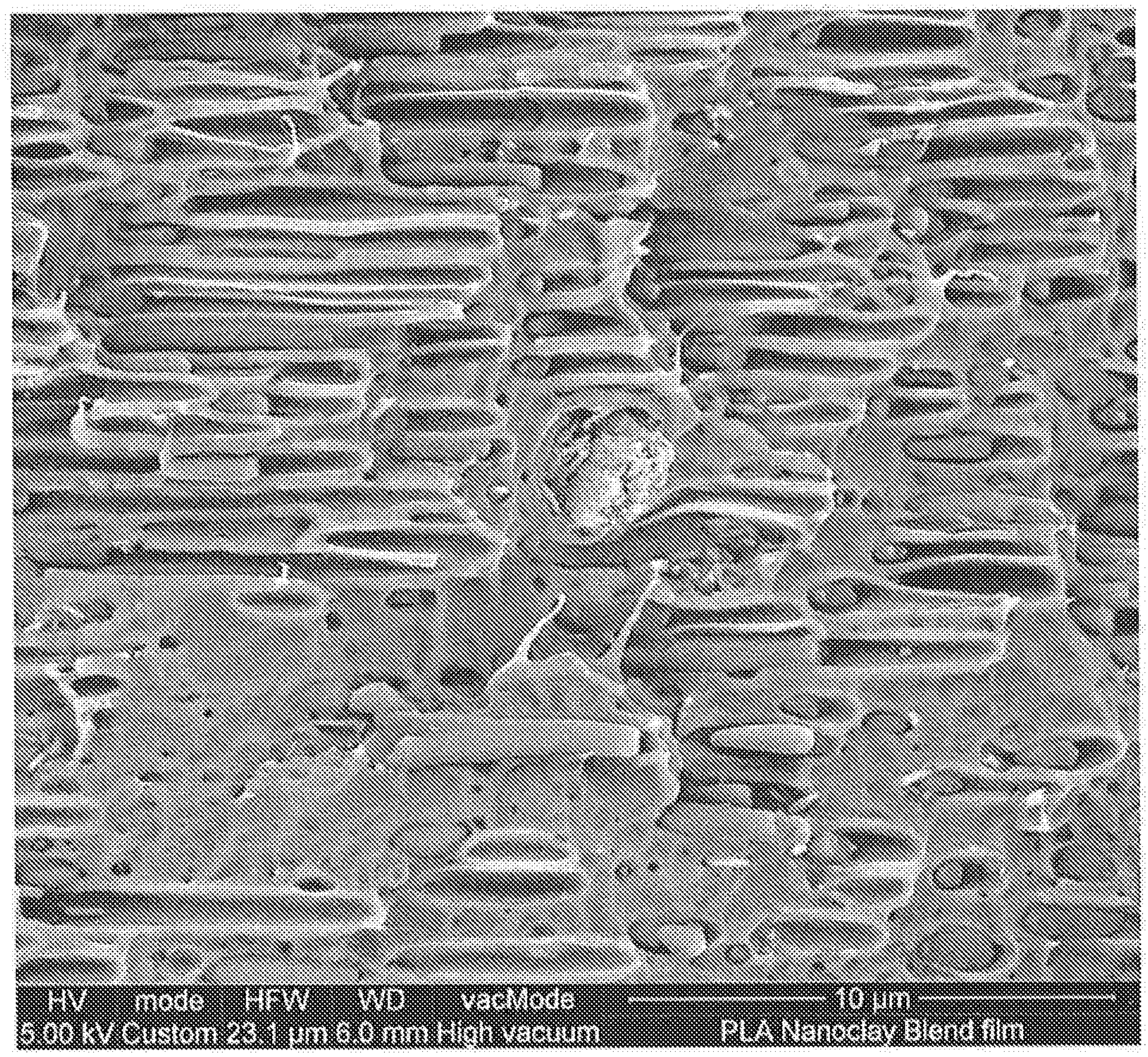
HV mode HFW WD vacMode 10 µm
5.00 kV Custom 23.1 µm 6.0 mm High vacuum PLA Nanoclay Blend film

FIG. 11

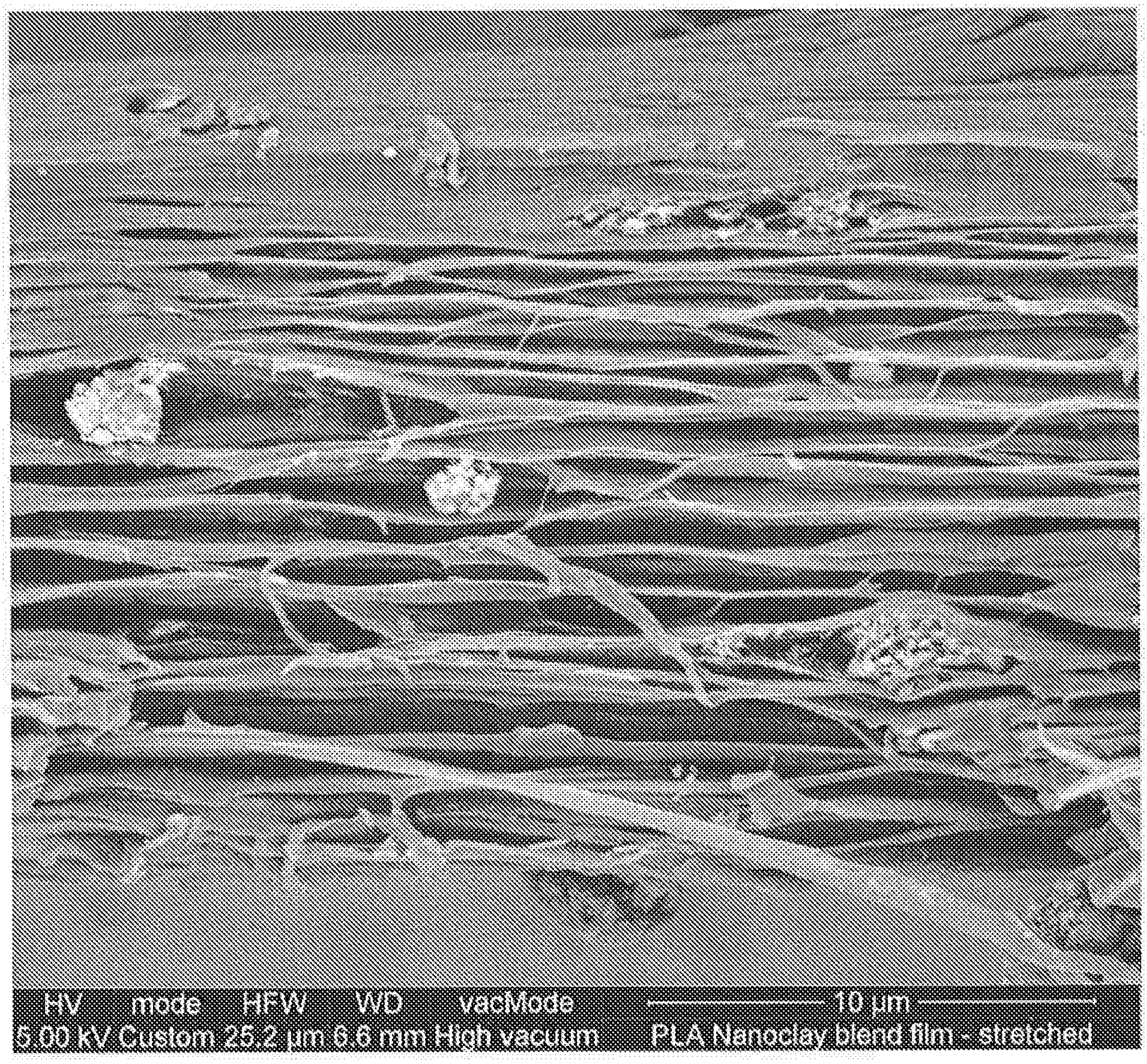
HV mode HFW WD vacMode 10 µm
5.00 kV Custom 25.2 µm 6.6 mm High vacuum PLA Nanoclay blend film - stretched

FIG. 12

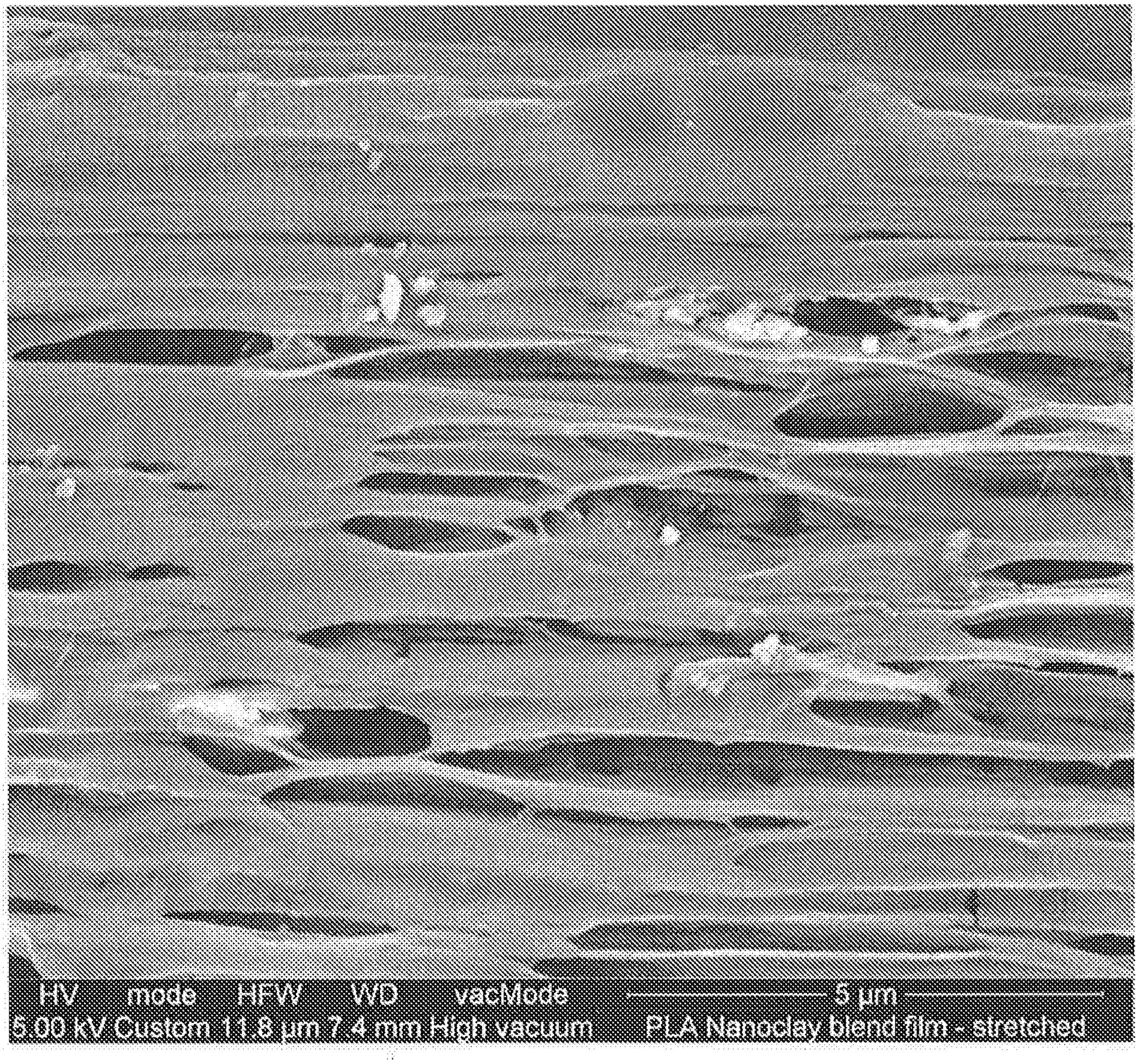
HV mode HFW WD vacMode 5 µm
5.00 kV Custom 11.8 µm 7.4 mm High vacuum PLA Nanoclay blend film - stretched

FIG. 13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2010068484 A1
- US 4797468 A
- US 5470944 A
- US 5770682 A
- US 5821327 A
- US 5880254 A
- US 6326458 B
- US 4937299 A, Ewen
- US 5218071 A, Tsutsui
- US 5272236 A, Lai
- US 5278272 A, Lai
- US 6500563 B, Datta
- US 5539056 A, Yang
- US 5596052 A, Resconi
- US 5571619 A, McAlpin
- US 5322728 A, Davis
- US 5472775 A, Obijeski
- US 6090325 A, Wheat
- US 5179164 A


### Non-patent literature cited in the description


- **WYEYCH.** Solubility Handbook of Plastics. 2004
- *ASTM,* 2008, D5725-99